(19)

Europäisches
Patentamt
European
Patent Office
Office européen
des brevets

(11) **EP 4 210 413 A1**

(12) **EUROPEAN PATENT APPLICATION**

(43) Date of publication:
**12.07.2023 Bulletin 2023/28**

(21) Application number: **22150597.7**

(22) Date of filing: **07.01.2022**

(51) International Patent Classification (IPC):
*H04W 72/12* (2023.01)        *H04W 74/08* (2009.01)

(52) Cooperative Patent Classification (CPC):
**H04W 74/0808; H04W 72/23;** H04B 7/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Panasonic Intellectual Property
Corporation
of America
Torrance, CA 90504 (US)**

(72) Inventors:
• **KUANG, Quan
  63225 Hessen (DE)**
• **SUZUKI, Hidetoshi
  Osaka, 571-8501 (JP)**

(74) Representative: **Grünecker Patent- und
Rechtsanwälte
PartG mbB
Leopoldstraße 4
80802 München (DE)**

(54) **TERMINAL APPARATUS AND BASE STATION INVOLVED IN DIRECTIONAL
LISTEN-BEFORE-TALK**

(57)    Provided are a terminal apparatus, a base station, and methods for a terminal apparatus and a base station. The terminal apparatus comprises a transceiver, which, in operation, receives configuration or scheduling information indicating a time resource on a frequency spectrum applicable to listen-before-talk for monitoring a downlink control channel or for performing an uplink transmission, and indicating an association of the time resource with a first beam, and receives downlink control information, DCI, indicating an availability status of a second beam out of plural second beams in a time interval on the frequency spectrum, wherein the first beam is at least partially covered by said second beam, and circuitry which, in operation, determines, based on the DCI, the availability status and whether the time resource lies within the time interval, and determines whether to monitor the downlink control channel or perform the uplink transmission in accordance with the determination.

```
┌─────────────────────────────┐
│ UE is configured with a control │
│ resource set (CORESET) that is  │
│ associated with a beam (e.g. indicated │
│ by a TCI-state) for PDCCH monitoring │
│                        S1110 │
└─────────────────────────────┘
              │
              ▼
        ╱─────────────╲
       ╱ Is UE informed that ╲        No
      ╱ the spatial direction  ╲──────────┐
      ╲ of the CORESET is      ╱          │
       ╲ unavailable for a    ╱           │
        ╲ time duration?     ╱            │
         ╲      S1130      ╱              │
          ╲──────────────╱               │
              │ Yes                       │
              ▼                           │
        ╱─────────────╲                   │
       ╱   Is the PDCCH  ╲   No            │
      ╱    monitoring     ╲────┐          │
      ╲   occasions of the ╱    │          │
       ╲  CORESET within  ╱     │          │
        ╲ the time duration? S1140         │
         ╲──────────────╱      │          │
              │ Yes             │          │
              ▼                 ▼          ▼
  ┌──────────────┐   ┌──────────────────┐
  │ UE skips the │   │  UE monitors (e.g. │
  │   PDCCH      │   │  tries to receive and │
  │  monitoring  │   │  decode) the PDCCH │
  │       S1150  │   │           S1160   │
  └──────────────┘   └──────────────────┘
```

**Fig. 11**

**Description**

**1. Technical Field**

The present disclosure relates to transmission and reception of signals in a communication system. In particular, the present disclosure relates to methods and apparatuses for such transmission and reception.

**2. Description of the Related Art**

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).
For systems like LTE, LTE-A, and NR, further modifications and options may facilitate efficient operation of the communication system as well as particular devices pertaining to the system.

**SUMMARY**

One non-limiting and exemplary embodiment facilitates efficient beamforming operation in an unlicensed band.
In an embodiment, the techniques disclosed herein feature a terminal apparatus. The terminal apparatus comprises a transceiver and circuitry. The transceiver, in operation, receives configuration or scheduling information indicating a time resource on a frequency spectrum applicable to listen-before-talk, LBT, operation for monitoring a downlink control channel or for performing an uplink transmission, and indicating an association of the time resource with a first beam, and downlink control information, DCI, indicating an availability status of a second beam out of a plurality of second beams in a time interval on the frequency spectrum. The first beam is at least partially covered by the second beam. The circuitry, in operation, determines, based on the DCI, the availability status of the second beam in the time resource and whether the time resource lies within the time interval. In accordance with the availability status of the second beam and the result of determining whether the time resource lies within the time interval, the circuitry determines whether or not to perform to monitor the downlink control channel or to perform the uplink transmission in the time resource
It should be noted that general or specific embodiments may be implemented as a system, a method, an integrated circuit, a computer program, a storage medium, or any selective combination thereof.
Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

**BRIEF DESCRIPTION OF THE FIGURES**

In the following exemplary embodiments are described in more detail with reference to the attached figures and drawings.

Fig. 1      shows an exemplary architecture for a 3GPP NR system;

Fig. 2      is a schematic drawing which shows functional split between NG-RAN and 5GC,

Fig. 3      is a sequence diagram for RRC connection setup/reconfiguration procedures,

Fig. 4      is a schematic drawing showing usage scenarios of Enhanced mobile broadband (eMBB), Massive Machine Type Communications (mMTC) and Ultra Reliable and Low Latency Communications (URLLC),

Fig. 5      is a block diagram showing an exemplary 5G system architecture for a non-roaming scenario,

Fig. 6      illustrates spatial LBT (listen-before-talk) using a wide sensing beam,

Fig. 7      illustrates spatial LBT using plural narrow sensing beams,

Fig. 8      is a block diagram of a base station and a terminal apparatus,

| Fig. 9 | is a block diagram showing terminal apparatus circuitry, |
| --- | --- |

Fig. 9        is a block diagram showing terminal apparatus circuitry,

Fig. 10       is a flow chart showing steps of a communication method for a base station and a communication method for a terminal apparatus,

Fig. 11       is a flow chart showing steps of a downlink communication method for a terminal apparatus,

Fig. 12       is a flow chart showing steps of an uplink communication method for a terminal apparatus,

Fig. 13       is a flow chart showing steps of a downlink communication method for a terminal apparatus

Fig. 14       flow chart showing steps of an uplink communication method for a terminal apparatus

Fig. 15       illustrates indication of directional availability,

Fig. 16       illustrates indication of directional availability and directional duration,

Fig. 17       illustrates indication of directional availability and time allocation

Figures 18-20  illustrate indication of directional availability and TDM (time division multiplex) patterns, and

Fig. 21       illustrates directional availability indication via slot format indication

## DETAILED DESCRIPTION

*5G NR system architecture and protocol stacks*

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

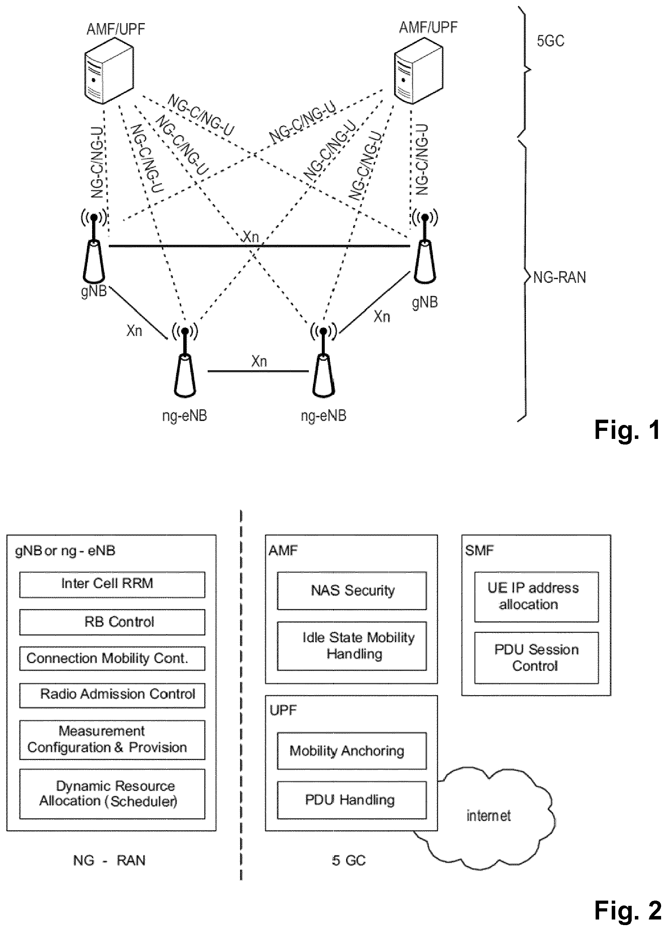

Among other things, the overall system architecture assumes an NG-RAN (Next Generation - Radio Access Network) that comprises gNBs (gNodeB), providing the NG-radio access user plane (SDAP/PDCP/RLC/MAC/PHY) and control plane (RRC, Radio Resource Control) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), and/or massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability ($1-10^{-5}$ within 1ms). Finally, mMTC may preferably require high connection density (1,000,000 devices/$km^2$ in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60kHz... are being considered at the moment. The symbol duration $T_u$ and the subcarrier spacing $\Delta f$ are directly related through the formula $\Delta f = 1 / T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

In NR, a resource block (RB) is defined as 12 consecutive subcarriers in frequency domain. Resource blocks are numbered from zero upwards in frequency domain as Common resource blocks for a subcarrier spacing configuration. Physical resource blocks (PRBs) are defined within a bandwidth part (a subset of contiguous common resource blocks) and numbered per bandwidth part.

*5G NR functional split between NG-RAN and 5GC*

Fig. 2 illustrates functional split between NG-RAN and 5GC. NG-RAN logical node is a gNB or ng-eNB (next generation eNB). The 5GC has logical nodes AMF, UPF and SMF.

In particular, the gNB and ng-eNB host the following main functions:

- Functions for Radio Resource Management such as Radio Bearer Control, Radio Admission Control, Connection Mobility Control, Dynamic allocation of resources to UEs in both uplink and downlink (scheduling);

- IP header compression, encryption and integrity protection of data;

- Selection of an AMF at UE attachment when no routing to an AMF can be determined from the information provided by the UE;

- Routing of User Plane data towards UPF(s);

- Routing of Control Plane information towards AMF;

- Connection setup and release;

- Scheduling and transmission of paging messages;

- Scheduling and transmission of system broadcast information (originated from theAMF or OAM);

- Measurement and measurement reporting configuration for mobility and scheduling;

- Transport level packet marking in the uplink;

- Session Management;

- Support of Network Slicing;

- QoS Flow management and mapping to data radio bearers;

- Support of UEs in RRC_INACTIVE state;

- Distribution function for NAS (Non-access stratum) messages;

- Radio access network sharing;

- Dual Connectivity;

- Tight interworking between NR and E-UTRA.

The Access and Mobility Management Function (AMF) hosts the following main functions:

- Non-Access Stratum, NAS, signaling termination;
- NAS signaling security;
- Access Stratum, AS, Security control;
- Inter Core Network, CN, node signaling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:

- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:

- Session Management;

- UE IP address allocation and management;

- Selection and control of UP function;

- Configures traffic steering at User Plane Function, UPF, to route traffic to proper destination;

- Control part of policy enforcement and QoS;

- Downlink Data Notification.

*RRC connection setup and reconfiguration procedures*

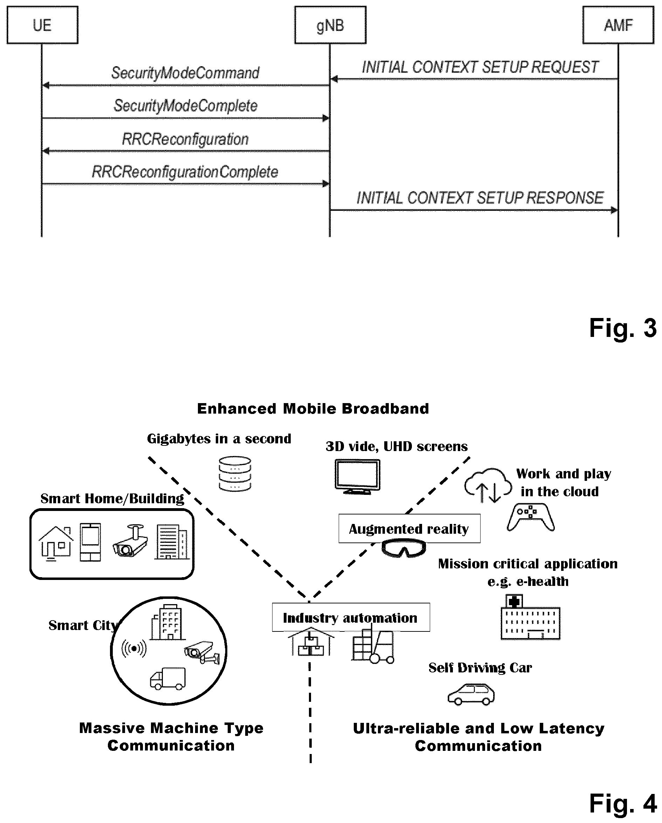

Fig. 3 illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a Security-ModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

*Usage Scenarios of IMT for 2020 and beyond*

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. Fig. 2 of ITU-R M.2083).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI (Downlink Control Information) formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution. The tighter requirements are higher reliability (up to $10^{-6}$ level), higher availability, packet sizes of up to 256 bytes, time synchronization down to the order of a few μs where the value can be one or a few μs depending on frequency range and short latency in the order of 0.5 to 1 ms in particular a target user plane latency of 0.5 ms, depending on the use cases.

Moreover, for NR URLLC, several technology enhancements from the physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising e.g. fourteen symbols).

In slot-based scheduling or assignment, a slot corresponds to the timing granularity (TTI - transmission time interval) for scheduling assignment. In general, TTI determines the timing granularity for scheduling assignment. One TTI is the time interval in which given signals is mapped to the physical layer. For instance, conventionally, the TTI length can vary from 14-symbols (slot-based scheduling) to 2-symbols (non-slot based scheduling). Downlink (DL) and uplink (UL) transmissions are specified to be organized into frames (10 ms duration) consisting of 10 subframes (1 ms duration). In slot-based transmission, a subframe is further divided into slots, the number of slots being defined by the numerology / subcarrier spacing. The specified values range between 10 slots per frame (1 slot per subframe) for a subcarrier spacing of 15 kHz to 80 slots per frame (8 slots per subframe) for a subcarrier spacing of 120 kHz. The number of OFDM symbols per slot is 14 for normal cyclic prefix and 12 for extended cyclic prefix (see section 4.1 (general frame structure), 4.2 (Numerologies), 4.3.1 (frames and subframes) and 4.3.2 (slots) of the 3GPP TS 38.211 V15.3.0, Physical channels and modulation, 2018-09). However, assignment of time resources for transmission may also be non-slot based. In particular, the TTIs in non slot-based assignment may correspond to minislots rather than slots. I.e., one or more mini-slots may be assign to a requested transmission of data/control signaling. In non slot-based assignment, the minimum length of a TTI may for instance be 1 or 2 OFDM symbols.

*QoS control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

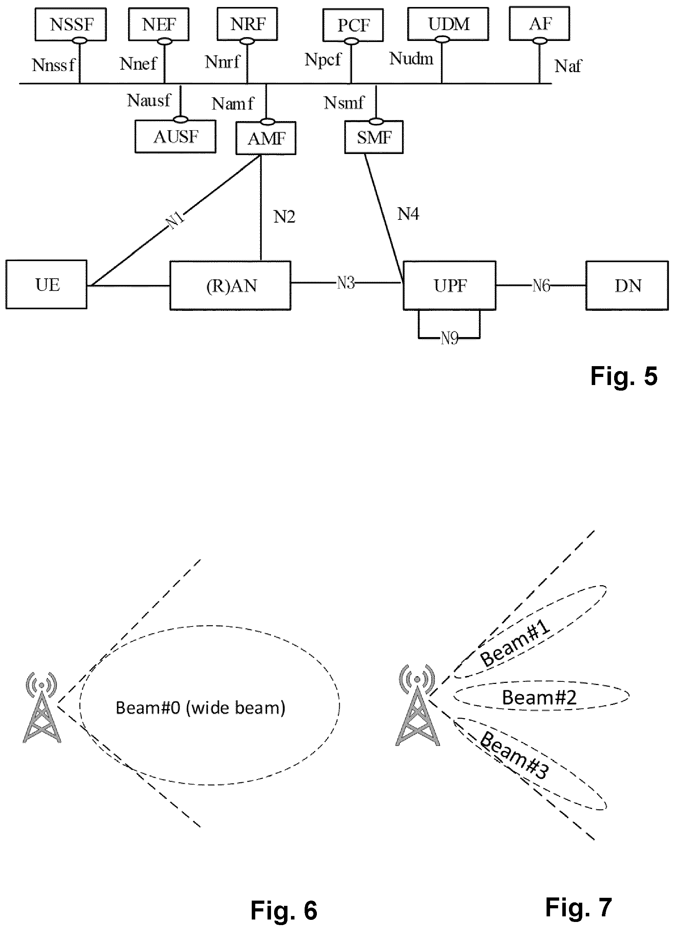

Fig. 5 illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF, UPF, etc.) of the 5GC to establish a PDU session including a radio bearer between a gNodeB and a UE in accordance with the QoS requirement and control circuitry, which, in operation, performs the services using the established PDU session.

*LBT (Listen-before-talk) operation*

In 3GPP, NR-based operation in an unlicensed spectrum (NR-U) is studied. Therein, at least for a band where it is not possible to guarantee, e.g. by regulation, the absence of Wi-Fi or other competing systems or radio access technologies (RATs), channel access procedures using LBT (listen before talk) may be performed. European and Japanese regulations, for instance, mandate the usage of LBT in the unlicensed bands. Apart from regulatory requirements, sensing via LBT is one way for fair sharing of the unlicensed spectrum, and hence it is considered to be a vital feature for fair and friendly operation in the unlicensed spectrum in a single global solution framework.

The channel access procedure using LBT is a procedure based on sensing that evaluates the availability of a channel for performing transmission. The basic unit for sensing is a sensing slot with a duration depending on bands and/or regulations. For example, for sub-7 GHz band, the sensing slot has a duration of 9us (microseconds) as specified in 3GPP TS 37.213 v17.0.0. On the other hand, for frequency range 2-2 (i.e. band located from 52.6 to 71 GHz), the sensing slot has a duration of 5us (see Section 4.4 of 3GPP TS 37.213 v17.0.0).

The channel is considered to be idle for the sensing slot duration if an eNB/gNB or a UE senses the channel during the sensing slot duration, and determines that the detected energy within the sensing slot duration is less than an energy detection threshold. Otherwise, the channel is considered busy for the sensing slot duration. Once the channel is identified as busy for one sensing slot, the device has option to keep sensing the channel for more sensing slots, or to drop the attempt for this transmission at all. Similarly, once the channel is identified as idle, the device has the option to proceed to transmit immediately, or to sense a few more sensing slots to make sure that the channel is really unoccupied. In order to clearly define the behavior of the device, 3GPP has specified different types of channel access procedures and the applicable scenarios respectively.

For example, in 3GPP TS 37.213 v17.0.0, the following 3 types of channel access procedures are specified for frequency range 2-2 (see Sections 4.4.1, 4.4.2, and 4.4.3):

Type 1 channel access procedures:

Channel access procedures to be performed by a gNB/UE where the time duration spanned by the sensing slots that are sensed to be idle before a transmission(s) is random based on a fixed contention window size. The clause is applicable to any transmission initiating a channel occupancy by the gNB/UE.

The gNB/UE may transmit a transmission after first sensing the channel to be idle during the sensing slot duration of a defer duration $T_d$ and after the counter $N$ is zero in step 4. The counter N is adjusted by sensing the channel for additional sensing slot duration(s) according to the steps below:

1) set $N = N_{init}$, where $N_{init}$ is a random number uniformly distributed between 0 and *CW,* and go to step 4;

2) if $N > 0$ and the gNB/UE chooses to decrement the counter, set $N = N - 1$;

3) sense the channel for an additional sensing slot duration, and if the channel is idle for the additional sensing slot duration, go to step 4; else, go to step 5;

4) if $N = 0$, stop; else, go to step 2.

5) sense the channel until either it is detected busy within an additional defer duration $T_d$ or it is detected to be idle for the sensing slot of the additional defer duration $T_d$;

6) if the channel is sensed to be idle during the sensing slot duration of the additional defer duration $T_d$, go to step 4; else, go to step 5;

In the above procedures, *CW* is the contention window and *CW* = 3.

The defer duration is $T_d = 8\mu s$ and includes a sensing slot duration $T_{sl} = 5\mu s$ for performing as least a single measurement to determine whether the channel is idle.

A gNB/UE shall not transmit on a channel for a *Channel Occupancy Time* that exceeds *5ms*.

Type 2 channel access procedures

Channel access procedures to be performed by a gNB/UE where the time duration spanned by sensing slots that are sensed to be idle before a DL/UL transmission(s) is deterministic.

A gNB/UE may transmit a transmission(s) on a channel immediately after $T_d$ which includes a sensing slot with

a duration $T_{sl}$ = 5$\mu s$ where the channel is sensed to be idle.

Type 3 channel access procedures

A gNB/UE may transmit a transmission on a channel without sensing the channel.

Basically, the channel access schemes for NR-based access for unlicensed spectrum can be classified into the following categories CAT1 (Category 1) to CAT4 (Category 4):

*Category 1: Immediate transmission*

**[0053]** - It is referred to as CAT1 LBT although there is no sensing needed before the transmission.

*Category 2: LBT without random back-off*

-The duration of time that the channel is sensed to be idle before the transmitting entity transmits is deterministic.

*Category 3: LBT with random back-off with a contention window of fixed size*

-The LBT procedure has the following procedure as one of its components. The transmitting entity draws a random number N within a contention window. The size of the contention window is specified by the minimum and maximum value of N. The size of the contention window is fixed. The random number N is used in the LBT procedure to determine the duration of time that the channel is sensed to be idle before the transmitting entity transmits on the channel.

*Category 4: LBT with random back-off with a contention window of variable size*

-The LBT procedure has the following as one of its components. The transmitting entity draws a random number N within a contention window. The size of contention window is specified by the minimum and maximum value of N. The transmitting entity can vary the size of the contention window when drawing the random number N. The random number N is used in the LBT procedure to determine the duration of time that the channel is sensed to be idle before the transmitting entity transmits on the channel.

With the above categories, the Type 1, Type 2, and Type 3 channel access procedures mentioned above can be mapped into CAT3 LBT, CAT2 LBT, and CAT1 LBT, respectively.

After an initiating device (e.g. a gNB in NR) has acquired the channel occupancy, it can share resources with a responding device (e.g. a UE) within the channel occupancy time (COT), such that the responding device can transmit with a simplified LBT, e.g. CAT2 LBT or, if allowed, no LBT (CAT1-LBT). Therein, whether no LBT (CAT1) or simplified LBT (CAT2 in 3GPP terminology) is required, may depend on an operation band or on local (e.g. national) regulation. Moreover, the maximum COT that the initiating device can claim is subject to the operation band and regulation. As an example, for operation in 60 GHz band, it is 5 ms according to Harmonised European Standard ETSI EN 302 567.

*Spatial LBT*

For NR operation in high frequency bands (e.g. above 52.6 GHz), it is envisaged to use directional transmission and reception using beamforming to concentrate the energy. Accordingly, the serving area of a base station is divided into a plurality of beams.

In unlicensed spectrum where beamformed transmission is used, the transmitter or transmitting entity (e.g. an initiating device) can perform a so-called directional LBT (listen-before-talk) to sense the energy along a certain beam or direction (such as a beam or a group of beams). More specifically, the spatial domain filter for sensing during the sensing slot duration would collect the energy from a certain direction rather than omni-directional. Note that the terms spatial/directional, directional/spatial channel sensing, and directional/spatial channel access procedure are used interchangeably in the following description.

The detected energy using directional sensing in the sensing slot duration would be used to be compared with a threshold in order to determine whether the channel is idle or busy for the sensing slot duration, and then proceed with transmission or with further channel sensing in more sensing slots, depending on specific type of channel access procedures as mentioned in the previous section. Notably, if the directional sensing is used, the transmission should be performed only within the sensed direction. In other words, the obtained channel occupancy is directional. Transmission outside the sensed direction is not fair with respect to co-existence with other RATs in the unlicensed spectrum and therefore should be avoided. As of 3GPPP Release 17 (Rel-17), directional LBT provides a spatial dimension in addition to the omni-directional LBT used in Rel-16.

In directional LBT, the sensing direction can be sensed by one wide sensing beam, as illustrated in Fig. 6, or multiple narrow sensing beams, as illustrated in Fig. 7. On the one hand, with a single wide sensing beam, lower LBT complexity can be achieved, but there is less flexibility, because the sensing direction is decided as a whole to either pass or fail the LBT. On the other hand, using multiple narrow sensing beams brings about a higher LBT complexity. However, more flexibility can be provided. In particular, if not all but a subset of the sensing beams pass the LBT, a transmission can still take place over the cleared beams (the beams passing the LBT).

As can be seen from Figures 6 and 7, in the present disclosure, the term "direction" is used to indicate a directional or angular range or a directional sector rather than a line (wherein "sector" is to be understood by its geometric meaning rather than possible specific meanings the term may have in the field of radio technology, such as a particular angle).

As described, in listen-before-talk operation, after an initiating device (e.g. a gNB in NR) has acquired the channel occupancy, it can share the channel occupancy with a responding device (e.g. a UE) within the channel occupancy time (COT), such that the responding device can transmit with a simplified LBT, e.g. CAT2 LBT or, if allowed, no LBT (CAT1-LBT).

If a channel is acquired by a directional LBT (resulting in a directional channel occupancy), sharing the channel occupancy outside the sensed (acquired) direction is not fair with respect to co-existence and therefore should be avoided.

In NR operation of Rel-16, a gNB can send a DCI 2_0 to inform a UE, among other parameters, of the following: duration of the channel occupancy time (COT), slot format indication (SFI) indicating symbols of a slot as downlink (DL, D), uplink (UL, U), and flexible (F) symbols. DCI format 2_0 is used as a group-common DCI for notifying a group of UEs. Besides the slot format and COT duration mentioned above, the other parameters that can be carried by DCI format 2_0 in Rel-16 are available RB (resource block) sets, and search space group switching (for an overview of DCI formats used in NR, see 3GPP Technical Specification 38.212, chapter 7.3.1).

By comparing the configured or scheduled uplink transmission timing with the COT duration indicated by DCI format 2_0, the UE knows whether the uplink transmission is within the gNB's COT, and then performs LBT correspondingly. For instance, if outside the gNB's COT, the UE performs CAT4-LBT before UL transmission (Per Rel-16). If inside the COT, the UE performs CAT2 LBT before UL transmission (per Rel-16).

Similarly, for the downlink the UE also knows whether configured PDCCH monitoring can be cancelled to save UE power based on the SFI in DCI 2_0. If SFI indicates UL or Flexible symbols, the UE can skip monitoring of PDCCH over these symbols.

However, the above can work only under the assumption that the channel occupancy is not associated with any direction or beam. In other words, both UE and gNB assume that they are allowed to transmit (and they are obliged to monitor) along any direction as long as the transmission is within the COT. As explained earlier, this assumption does not hold for Rel-17 when the directional LBT is introduced.

In the current DCI 2_0 (as specified in Rel-16 and reused in Rel-17), there is no spatial information regarding spatial LBT. In particular, DCI 2_0 does not indicate for which direction the channel occupancy applies, and which direction has been sensed. Furthermore, it is not indicated which beam(s) within the sensing direction is/are available or unavailable, if multiple sensing beams are used to acquire the channel occupancy, as shown in Fig. 7.

Lacking the spatial information, possible consequences and issues for the downlink are that the UE may waste power to monitor PDCCH over an unintended direction of gNB or unavailable beam(s) that have failed LBT during the gNB's sensing. Moreover, for the uplink, it may be difficult for the UE to judge whether or not it is within the gNB's directional channel occupancy.

In view of these issues, it is an approach of the present disclosure to inform the UE of directional availability (e.g. a direction or beams(s) in which the channel has been sensed) for an associated time duration. Based on this information on directional availability, the UE decides on how to monitor "directionally-covered" CORESET(s) (Control Resource Sets) and how to perform LBT for "directionally-covered" UL transmission(s). E.g., the information on directional availability is provided as a spatial enhancement for DCI format 2_0.

Therein, "directionally-covered CORESET" means a Control Resource Set associated with a beam (e.g. indicated by a TCI state, but not limited thereto), that is "covered" by the direction.

Further, "directionally-covered" UL transmission means an UL transmission associated with a beam (e.g. indicated by SRS-SpatialRelationInfo or TCI state) that is "covered by the direction.

How the expression "covered" or "to cover" is defined will be explained in more detail.

A terminal is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay.

A base station is a network node or scheduling node, e.g. forming a part of the network for providing services to terminals. A base station is a network node, which provides wireless access to terminals. E.g., a base station is referred to in NR as gNB (gNodeB).

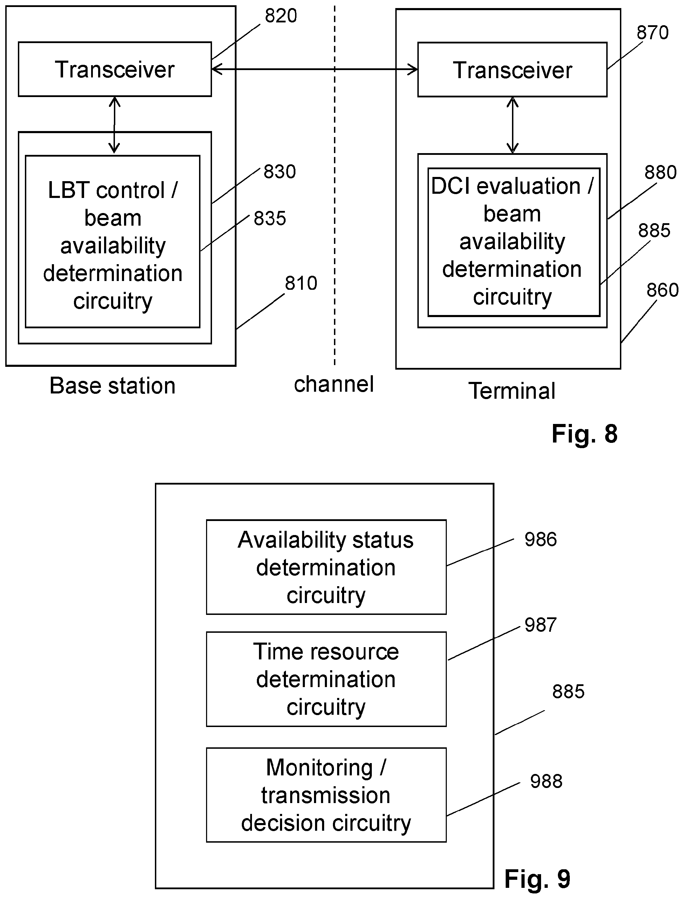

Provided by the present disclosure is a terminal apparatus 860 shown in Fig. 8. The terminal apparatus 860 comprises a transceiver 870 (or "UE transceiver") and circuitry 880 (or "UE circuitry", e.g. processing/control circuitry). The transceiver 870, in operation, receives configuration information or scheduling information indicating a time resource for monitoring a downlink control channel (e.g. a PDCCH) on a frequency spectrum applicable to LBT or for performing an uplink transmission on a frequency spectrum applicable to LBT. The configuration or scheduling information indicates an association of the time resource with a first beam.

The transceiver 870 further receives downlink control information (DCI) indicating an availability status of a second beam out of a plurality of second beams in a time interval on the frequency spectrum, wherein the first beam is covered, at least partially, by the second beam.

Based on the DCI, the circuitry 880 determines the availability status of second beam in the time resource and determines, based on the DCI, whether the time resource lies within the time interval for which the availability status is indicated in the DCI. For example, the circuitry 880 evaluates the DCI to determine the availability status of the second beam and to determine whether the time resource lies within the time interval. In accordance with the determined availability status of the second beam and the result of determining whether the time resource lies within the time interval, the circuitry 880 determines (e.g. decides) whether or not to monitor the downlink control channel or, respectively, whether or not to perform the uplink transmission in the time resource.

Further provided, and also shown in Fig. 8, is a base station 810. The base station 810 comprises a transceiver 820 ("BS transceiver") and circuitry 830 ("BS circuitry"). The transceiver 820, in operation, transmits configuration or scheduling information indicating a time resource for a UE to monitor a downlink control channel or to perform an uplink transmission. The scheduling or control information indicates an association of the time resource with a first beam.

The circuitry 830, in operation, determines, via LBT operation, an availability status of a second beam out of a plurality of second beams in a time interval including the time resource on the frequency spectrum, wherein the first beam is at least partially covered by said second beam. E.g., in the LBT operation, the circuitry 830 controls the transceiver 820 to perform channel sensing and to measure sensed energy in the second beam.

The transceiver 820, in operation, transmits DCI indicating the availability status of the second beam in the time interval on the frequency spectrum.

The circuitry 830, in operation, controls the transceiver 820 to perform transmission of the downlink control channel or reception of the uplink transmission in accordance with the availability status of the second beam in the time interval on the frequency spectrum.

Since the terminal apparatus or UE 860 decides whether or not to perform the monitoring of the downlink control channel, the present disclosure includes the case where monitoring or UL transmission is performed in the time resource, and also includes the case where the monitoring or UL transmission is omitted or skipped by the UE, e.g. when the second beam is determined to be unavailable. Accordingly, "controlling performing the downlink control channel or receiving the UL transmission" includes the case where the control channel transmission / UL reception is actually performed, as well as the case where said transmission or reception are omitted by the base station, e.g. due to the second beam being unavailable, depending on the case.

Base station 810 and terminal apparatus 860 communicate with each other over a wireless channel including a frequency spectrum applicable to LBT in a wireless communication system where beamforming operation as well as directional LBT is implemented.

For instance, the BS circuitry 830 comprises LBT control and beam availability determination circuitry 835 which, in operation, performs the LBT to determine the availability of the second beam. Moreover, the UE circuitry 885, for example, comprises DCI evaluation and beam availability determination circuitry 885. Exemplary UE beam availability determination circuitry 885 is shown in Fig. 9 to comprise availability status determination detection circuitry 986 and time resource determination circuitry 987 which evaluate the received DCI and monitoring / transmission decision circuitry 988 which, in operation, performs the decision on downlink control channel monitoring or uplink transmission.

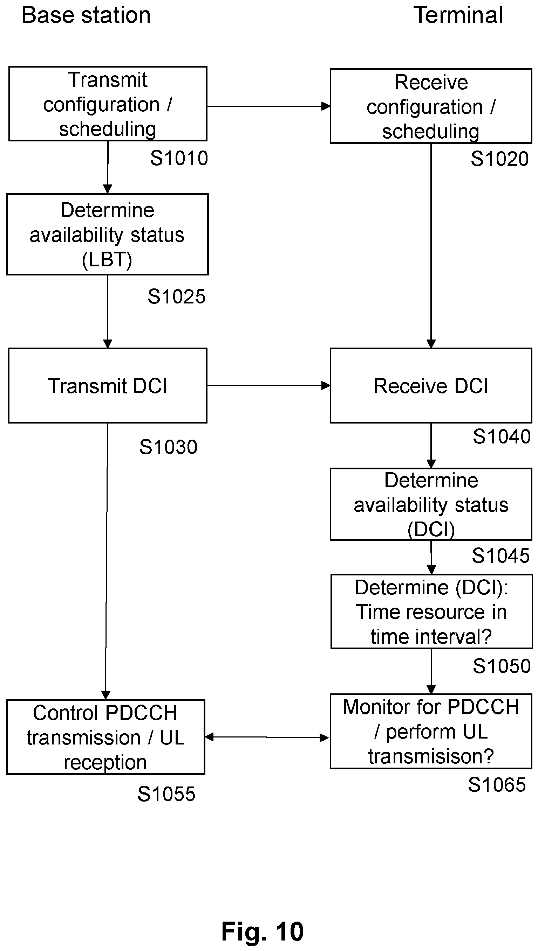

In correspondence with the above-disclosed base station 810 and terminal apparatus 860, provided are a communication method for a terminal apparatus and a communication method for a base station, the steps of which are illustrated in Fig. 10.

The method for the terminal apparatus comprises a step of receiving S1020 scheduling information or configuration information transmitted by a base station. The configuration or scheduling information indicates a time resource for monitoring a downlink control channel on a frequency spectrum applicable to LBT or for performing an uplink transmission on a frequency spectrum applicable to LBT, and indicating an association of the time resource with a first beam.

The method for the terminal apparatus further includes a step S1040 of receiving downlink control information, DCI, transmitted from a base station, indicating an availability status of a second beam out of a plurality of second beams in a time interval on the frequency spectrum, wherein the first beam is at least partially covered by said second beam.

Based on the received DCI, in step S1045, the UE determines the availability status of the second beam in the time resource and determines in, step S1050, whether the time resource lies within the time interval.

The UE further determines, in step S1065, whether or not to monitor the downlink control channel, or whether or not to perform the uplink transmission in the time resource in accordance with the availability status of the second beam and the result of determining whether the time resource lies within the time interval.

The method for the base station includes a step of transmitting, S1010, scheduling information or configuration information to be received by a terminal apparatus. The configuration or scheduling information indicates a time resource for monitoring a downlink control channel on a frequency spectrum applicable to LBT or for performing an uplink transmission on a frequency spectrum applicable to LBT, and indicating an association of the time resource with a first beam.

The method for the base station further includes step S1025 of determining, via LBT operation, an availability status of a second beam out of a plurality of second beams in a time interval including the time resource on the frequency spectrum, wherein the first beam is at least partially covered by said second beam.

The method for the base station further includes step S1030 of transmitting downlink control information, DCI, indicating the availability status of the second beam in the time interval on the frequency spectrum to be received by the terminal apparatus.

Further, the method for the base station includes step S1055 of controlling transmission of the downlink control channel or reception of the uplink transmission in accordance with the availability status of the second beam in the time interval on the frequency spectrum. As mentioned and explained above for the corresponding base station apparatus, "controlling transmission of the downlink control channel or reception of the uplink transmission" may include controlling the omission or skipping of the transmission or, respectively, UL reception.

In the present disclosure, any details, examples and embodiments are to be understood as being applicable to both the base station side and the terminal apparatus side as well as both apparatuses and methods.

The frequency spectrum is a frequency spectrum applicable to LBT, such as an unlicensed spectrum used in unlicensed operation or licensed assisted access (LAA) operation.

Moreover, the present disclosure is applicable to both a downlink case and an uplink case, which are separated in the above description by the expression "or". In the DL case, the UE determines whether or not to monitor the downlink control channel. In the uplink case, the UE determines whether or not to perform a (configured or scheduled) uplink transmission.

Furthermore, the configuration and scheduling information comprises configuration information and/or scheduling information. For the downlink, the configuration information may be a configuration of a Control Resource Set (CORESET). A CORESET is a set of resource elements on which a PDCCH such as the above-mentioned downlink control channel is transmitted. The CORESET is configured semi-statically by RRC signaling for a bandwidth part and includes parameters indicating a duration of the time resource for monitoring the downlink control channel (PDCCH) as well as frequency domain resources. The CORESET configuration further includes, as an indication of an association of the time resource with a beam, a TCI state ID indicating a TCI (Transmission Configuration Indicator) state of the CORESET. The TCI state of the CORESET indicates quasi-co-location (QCL), i.e. common channel characteristics, between the CORESET and a Synchronization Signal Block (SSB) or a CSI (Channel State Information) reference signal associated with the beamforming beams. Thus, with the TCI state, the CORESET configuration provides an indication of a CORESET's beam.

For the uplink, the configuration or scheduling information may be a RRC configured UL transmission or scheduling or grant information of a dynamically scheduled UL transmission. The time resource for uplink transmission is given in the configuration or scheduling information. The configuration or scheduling information may further include, as an indication of an association of the time resource with a beam, a TCI state ID indicating a TCI state of the uplink transmission or SRS resource indicator (SRI) indicating a SRS resource ID for PUSCH transmission. If no beam is indicated for PUSCH, the transmit beam for PUSCH would follow the transmit beam for PUCCH, e.g. indicated by PUCCH-Spatial-RelationInfo-Id.

The configuration or scheduling information may further comprise an indication of a LBT type (e.g. a LBT category). For example, if the PUSCH is scheduled by DCI formats 0_1 or 0_2, one of the entry of Table 7.3.1.1.2-35 from 3GPP TS 38.212 v17.0.0 (Table 1), can be used to indicate to the UE as the LBT type for frequency range 1. For frequency range 2-2, UE can be indicated by DCI format 0_1 one of the entry of Table 7.3.1.1.2-35A, as the LBT type (Table 2).

**Table 1: (from 3GPP TS 38.212 v17.0.0) Table 7.3.1.1.2-35: Allowed entries for DCI format**

| Entry index | Channel Access Type | T d he CP extension T_"ext" index efined in Clause 5.3.1 of [4, 38.211] | CAPC |
|---|---|---|---|
| 0 | Type2C-ULChannelAccess defined in [clause 4.2.1.2.3 in 37.213] | 0 | 1 |

(continued)

| Entry index | Channel Access Type | T d he CP extension T_"ext" index efined in Clause 5.3.1 of [4, 38.211] | CAPC |
|---|---|---|---|
| 1 | Type2C-ULChannelAccess defined in [clause 4.2.1.2.3 in 37.213] | 0 | 2 |
| 2 | Type2C-ULChannelAccess defined in [clause 4.2.1.2.3 in 37.213] | 0 | 3 |
| 3 | Type2C-ULChannelAcces defined in clause 4.2.1.2.3 in 37.213] | 0 | 4 |
| 4 | Type2C-ULChannelAccess defined in [clause 4.2.1.2.3 in 37.213] | 2 | 1 |
| 5 | Type2C-ULChannelAccess defined in [clause 4.2.1.2.3 in 37.213] | 2 | 2 |
| 6 | Type2C-ULChannelAccess defined in [clause 4.2.1.2.3 in 37.213] | 2 | 3 |
| 7 | Type2C-ULChannelAccess defined in [clause 4.2.1.2.3 in 37.213] | 2 | 4 |
| 8 | Type2B-ULChannelAccess defined in [clause 4.2.1.2.2 in 37.213] | 0 | 1 |
| 9 | Type2B-ULChannelAccess defined in [clause 4.2.1.2.2 in 37.213] | 0 | 2 |
| 10 | Type2B-ULChannelAccess defined in [clause 4.2.1.2.2 in 37.213] | 0 | 3 |
| 11 | Type2B-ULChannelAccess defined in [clause 4.2.1.2.2 in 37.213] | 0 | 4 |
| 12 | Type2B-ULChannelAccess defined in [clause 4.2.1.2.2 in 37.213] | 2 | 1 |
| 13 | Type2B-ULChannelAccess defined in [clause 4.2.1.2.2 in 37.213] | 2 | 2 |
| 14 | Type2B-ULChannelAccess defined in [clause 4.2.1.2.2 in 37.213] | 2 | 3 |
| 15 | Type2B-ULChannelAccess defined in [clause 4.2.1.2.2 in 37.213] | 2 | 4 |
| 16 | Type2A-ULChannelAccess defined in [clause 4.2.1.2.1 in 37.213] | 0 | 1 |
| 17 | Type2A-ULChannelAccess defined in [clause 4.2.1.2.1 in 37.213] | 0 | 2 |
| 18 | Type2A-ULChannelAccess defined in [clause 4.2.1.2.1 in 37.213] | 0 | 3 |
| 19 | Type2A-ULChannelAccess defined in [clause 4.2.1.2.1 in 37.213] | 0 | 4 |
| 20 | Type2A-ULChannelAccess defined in [clause 4.2.1.2.1 in 37.213] | 1 | 1 |
| 21 | Type2A-ULChannelAccess defined in [clause 4.2.1.2.1 in 37.213] | 1 | 2 |
| 22 | Type2A-ULChannelAccess defined in [clause 4.2.1.2.1 in 37.213] | 1 | 3 |

(continued)

| Entry index | Channel Access Type | T d he CP extension T_"ext" index efined in Clause 5.3.1 of [4, 38.211] | CAPC |
|---|---|---|---|
| 23 | Type2A-ULChannelAccess defined in [clause 4.2.1.2.1 in 37.213] | 1 | 4 |
| 24 | Type2A-ULChannelAccess defined in [clause 4.2.1.2.1 in 37.213] | 3 | 1 |
| 25 | Type2A-ULChannelAccess defined in [clause 4.2.1.2.1 in 37.213] | 3 | 2 |
| 26 | Type2A-ULChannelAccess defined in [clause 4.2.1.2.1 in 37.213] | 3 | 3 |
| 27 | Type2A-ULChannelAccess defined in [clause 4.2.1.2.1 in 37.213] | 3 | 4 |
| 28 | Type1-ULChannelAccess defined in [clause 4.2.1.1 in 37.213] | 0 | 1 |
| 29 | Type1-ULChannelAccess defined in [clause 4.2.1.1 | 0 | 2 |
| 30 | Type1-ULChannelAccess defined in [clause 4.2.1.1 in 37.213] | 0 | 3 |
| 31 | Type1-ULChannelAccess defined in [clause 4.2.1.1 in 37.213] | 0 | 4 |
| 32 | Type1-ULChannelAccess defined in [clause 4.2.1.1 in 37.213] | 1 | 1 |
| 33 | Type1-ULChannelAccess defined in [clause 4.2.1.1 in 37.213] | 1 | 2 |
| 34 | Type1-ULChannelAccess defined in [clause 4.2.1.1 in 37.213] | 1 | 3 |
| 35 | Type1-ULChannelAccess defined in [clause 4.2.1.1 in 37.213] | 1 | 4 |
| 36 | Type1-ULChannelAccess defined in [clause 4.2.1.1 in 37.213] | 2 | 1 |
| 37 | Type1-ULChannelAccess defined in [clause 4.2.1.1 in 37.213] | 2 | 2 |
| 38 | Type1-ULChannelAccess defined in [clause 4.2.1.1 in 37.213] | 2 | 3 |
| 39 | Type1-ULChannelAccess defined in [clause 4.2.1.1 in 37.213] | 2 | 4 |
| 40 | Type1-ULChannelAccess defined in [clause 4.2.1.1 in 37.213] | 3 | 1 |
| 41 | Type1-ULChannelAccess defined in [clause 4.2.1.1 in 37.213] | 3 | 2 |
| 42 | Type1-ULChannelAccess defined in [clause 4.2.1.1 in 37.213] | 3 | 3 |
| 43 | Type1-ULChannelAccess defined in [clause 4.2.1.1 in 37.213] | 3 | 4 |
| 0_1 and DCI format 0_2, configured by higher layer parameter *ul-AccessConfigListDCI-0-1* and *ul-Access-ConfigListDCI-0-2,* respectively, in frequency range 1 | | | |

**Table 2: (from 3GPP TS 38.212 v17.0.0) Table 7.3.1.1.2-35A: Allowed entries for DCI format 0_1, configured by higher layer parameter *ul-AccessConfigListDCI-0-1* in frequency range 2-2**

| Entry index | Channel Access Type |
|---|---|
| 0 | Type 1 channel access defined in clause 4.4.1 of 37.213 |
| 1 | Type 2 channel access defined in clause 4.4.2 of 37.213 |
| 2 | Type 3 channel access defined in clause 4.4.3 of 37.213 |

The above-mentioned "first beam" is a beam for receiving the PDCCH or for transmitting the uplink transmission, as indicated for example by the TCI state of the CORESET or of the UL transmission.

The above-mentioned DCI indicates an availability status with respect to "second beam", wherein the "second beam" refers to a "direction" or "directional range" as described above. How the second beam is indicated and how it is determined whether the second beam covers the first beam will be described in more detail and by providing embodiments.

The availability status includes one of "available, "unavailable", or may be unknown. For instance, the DCI indicating the availability status of the second beam is a group-common DCI such as above-mentioned DCI format 2_0 or an enhanced or modified format based on DCI 2_0.

In a first case, the sensed direction corresponding to the second beam is not available for a certain duration including the time interval. Then, if the UE circuitry 880 determines, in the determining of the availability status, that the second beam is unavailable within the time interval, and determines that the time resource lies within the time interval, the UE circuitry 880 skips monitoring the downlink control channel or performing the uplink transmission in the time resource.

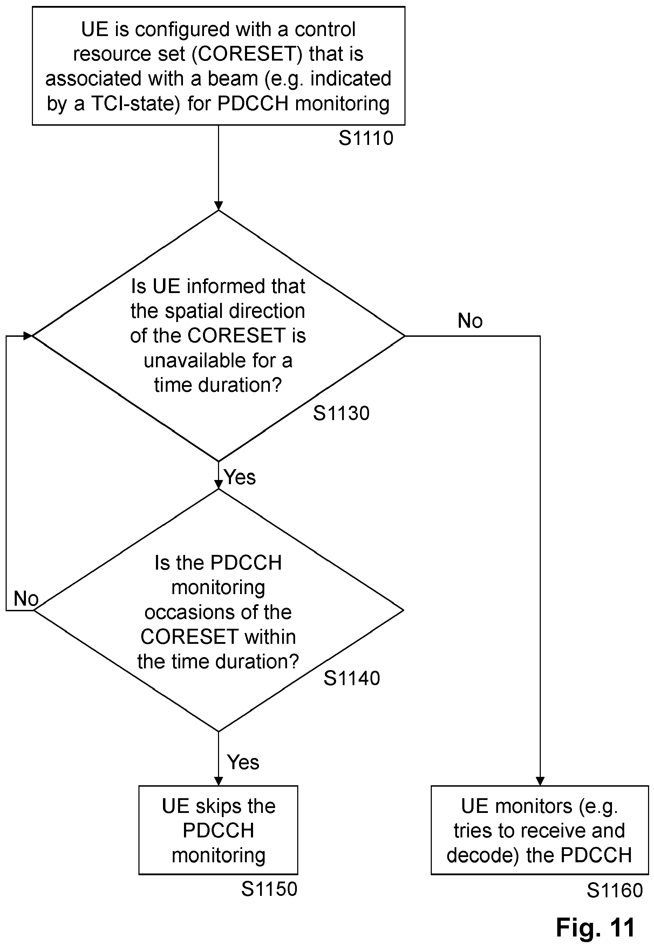

Thus, for DL reception of a PDCCH within the time interval, the UE is not required to monitor the directionally covered CORESET or CORESETs for the PDCCH. The UE's behavior for the downlink is illustrated in **Fig. 11.**

In step S1110 corresponding to step S1020, the UE is configured with a a control resource set (CORESET) that is associated with a "first" beam (e.g. indicated by a TCI-state) for PDCCH monitoring.

In step S1130 (corresponding to step S1045), the UE determines whether it is informed by the received DCI that the spatial direction (second beam) covering the (first) beam of the CORESET is unavailable for a time interval or duration. If no, the UE monitors (e.g. tries to receive and (blindly) decode) the PDCCH. If yes, the UE further determines in step S1140 corresponding to step S1050 whether the PDCCH monitoring occasion (the time resource for monitoring the PDCCH) is within the time duration for which the spatial direction is unavailable. If no, the method returns to step S1130. If yes, the UE skips PDCCH monitoring (does not monitor the PDCCH in the monitoring time resource).

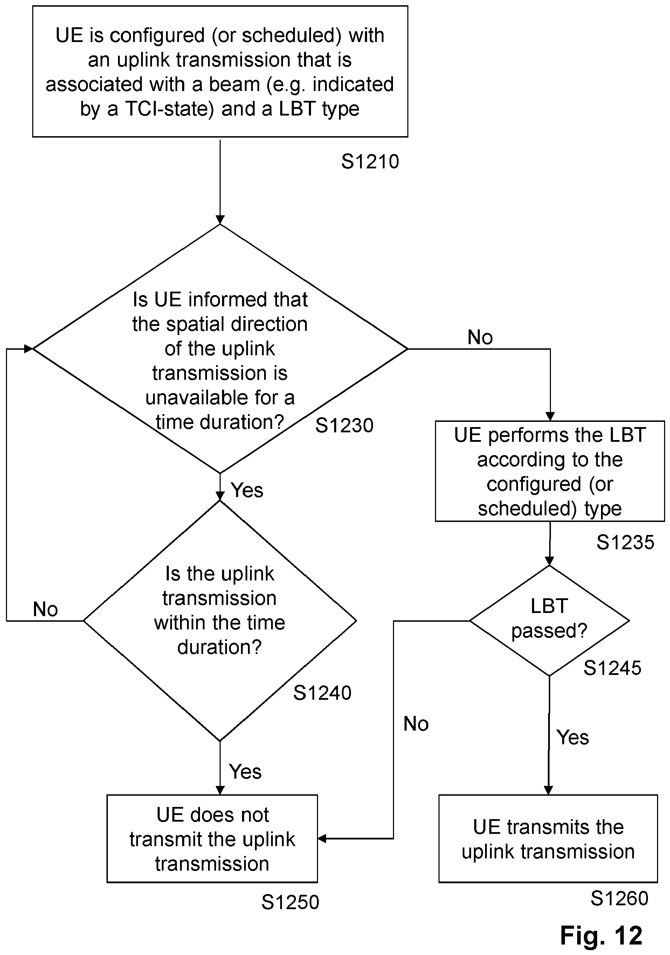

For a configured or scheduled UL transmission within the time interval for which the direction is unavailable, the UE is not allowed to transmit the directionally covered UL transmission on the (first) uplink beam covered by the (second) beam unavailable for the time interval. Hence, there is no need for the UE to perform LBT. The UL case is illustrated in Fig. 12.

In step S1210 corresponding to step S1020, the UE is configured (or scheduled) with an uplink transmission that is associated with a beam (e.g. indicated by a TCI-state) and a LBT type.

In step S1230 (corresponding to step S1045), the UE determines whether it is informed by the received DCI that the spatial direction (second beam) covering the (first) beam of the UL transmission is unavailable for a time interval or duration. If no, UE performs the LBT in step S1235 according to the configured (or scheduled) type. If LBT fails (meaning that UE has identified that the channel is already occupied), the UE does not perform the UL transmission (step S1250), and only transmits (S1260) the uplink transmission after determining in step 1245 that the LBT has passed.

If the UE determines in step S1230 that the spatial direction covering the beam of the uplink transmission is unavailable for the time interval, the UE determines in step S1240 whether the UL transmission is scheduled or configured to be performed within the time duration. If no, the method proceeds to step S1230. If yes, the UE skips LBT procedures and does not perform the UL transmission (step S1250).

The described UE behaviour for the case of the direction covering the CORESET's or UL transmission's beam being unavailable enables the UE to skip monitoring or transmitting on beams in unavailable directions. This allows the UE to save power.

Furthermore, the UE is not allowed to transmit on the UL within the unavailable duration or outside the direction including the beam for which the transmission is scheduled or configured. Thus, interference generated by the UE is reduced, and co-existence in an unlicensed frequency spectrum can be facilitated.

In a second case, a direction is determined to be available for a time interval or duration.

For DL monitoring within the time interval, the UE monitors a search space set group (SSSG) of the directionally-covered CORESET beam that is configured for inside the COT. The UE transceiver 870 then may receive a configuration of a first SSSG for monitoring the downlink control channel (PDCCH) within a channel occupancy time, COT, of a base station serving the terminal apparatus and of a second SSSG for monitoring the PDCCH outside the COT.

If UE circuitry 880 determines, in the determination of the availability status, that the second beam is available within the time interval and that the time resource lies within the time interval, the circuitry, in operation, controls the transceiver to monitor the downlink control channel in the first search space set group in the time resource.

A Search Space Set uses a CORESET to define specific resource blocks and symbols where the UE attempts to (blindly) decode the PDCCH. The search space set configuration includes parameters including CORESET ID, monitoring slot periodicity and offset, and monitoring symbols within the slot. According to an exemplary 3GPP implementation, the gNB is able to configure a search space set to be monitored by the UE, by using the Information Element *SearchSpace* (see e.g. TS 38.331 v16.0.0, section 6.3.2 incorporated herein by reference) including the monitoring slot periodicity using the parameter *monitoringSlotPeriodicityAndOffset.* The number of OFDM symbols to be monitored within the slot can be configured by the gNB using the parameter *monitoringSymbolsWithinSlot,* which can also be carried within the Information Element *SearchSpace.*

Search space sets can be grouped into SSSG. The different SSSGs can differ by when and/or how often the UE is required to monitor the PDCCH. This concept is very useful for operation in the unlicensed radio spectrum. For instance, the SSSG configured for inside the COT may, have a larger periodicity (e.g. larger interval between time resources for decoding) than the SSSG configured for outside the COT. The rationale under such configuration is that when it is outside the COT, having shorter periodicity for PDCCH monitoring means that gNB would have more chance to send PDCCH to UE once the gNB has acquired the channel. Therefore, the latency for transmission is reduced. On the other hand, once it is inside the COT (meaning that the channel access is already obtained), UE can reduce the PDCCH monitoring periodicity in order to save UE power.

Still in the second case where a direction is determined to be available for a time interval or duration, for a directionally covered UL transmission within the time interval, the UE performs a corresponding LBT type for inside the COT. The UE transceiver 870, in operation, receives a configuration of a first LBT type for performing the uplink transmission within the COT and of a second LBT type for performing the uplink transmission outside the COT. If determining that the second beam is available (e.g. has availability status "available") within the time interval and that the time resource lies within the time interval, the UE circuitry 880, in operation, controls the transceiver to perform LBT for the uplink transmission according to the first LBT type in the time resource.

For instance, the first LBT type for inside the COT may be CAT2 or CAT1 (no LBT) and may be configured by the base station (gNB) by RRC signaling.

Note that in some scenario, the second type of LBT for performing the uplink transmission that UE is configured or scheduled with may not be associated with the status of inside or outside the COT. In such scenario, as long as the condition of the second case is met (i.e. a direction is determined to be available for a time interval and the UL transmission is directionally covered within the time interval), UE would use the first LBT type for performing the uplink transmission (for within the COT), and ignore the second LBT type.

As a third case of the determined availability status, the availability of a direction is unknown to the UE. Accordingly, if the UE circuitry 880 determines that the availability status of the second beam is unknown within the time interval, the UE circuitry 880, in operation, controls the transceiver to monitor the downlink control channel in the second search space set group or to perform LBT for the uplink transmission according to the second LBT type.

The availability status may be determined to be unknown if the DCI indicates the availability status as being unknown. E.g., the gNB does not provide any indication in the DCI for the corresponding availability status. Alternatively, the DCI may provide an indication of the availability status as being "unknown". Both possibilities may apply to a case where the gNB has not performed sensing for the beam, resulting in the availability being unknown. The present disclosure covers both alternatives.

For the downlink control channel, the UE then monitors the SSSG of the directionally-covered CORESET(s) that is / are configured for outside the COT. Thus, the UE circuitry 880, in operation, controls the UE transceiver 870 to monitor the downlink control channel in the second search space set group configured for outside the COT.

For a directionally-covered UL transmission, the UE performs a corresponding (second) LBT type, e.g., CAT3, configured for outside the COT. Thus, the UE circuitry 880, in operation, controls the UE transceiver 870 to perform LBT for the uplink transmission according to the second LBT type.

In some scenario, the second type of LBT for performing the uplink transmission that UE is configured or scheduled with may not be associated with the status of inside or outside the COT. In such scenario, as long as the condition of the third case is met (i.e. a direction is determined to be unknown), UE would use the second LBT type for performing the uplink transmission.

Thanks to the indication of directional availability by the DCI, the UE has a knowledge of whether the DL and UL transmissions are within or outside the COT, and to behave correspondingly.

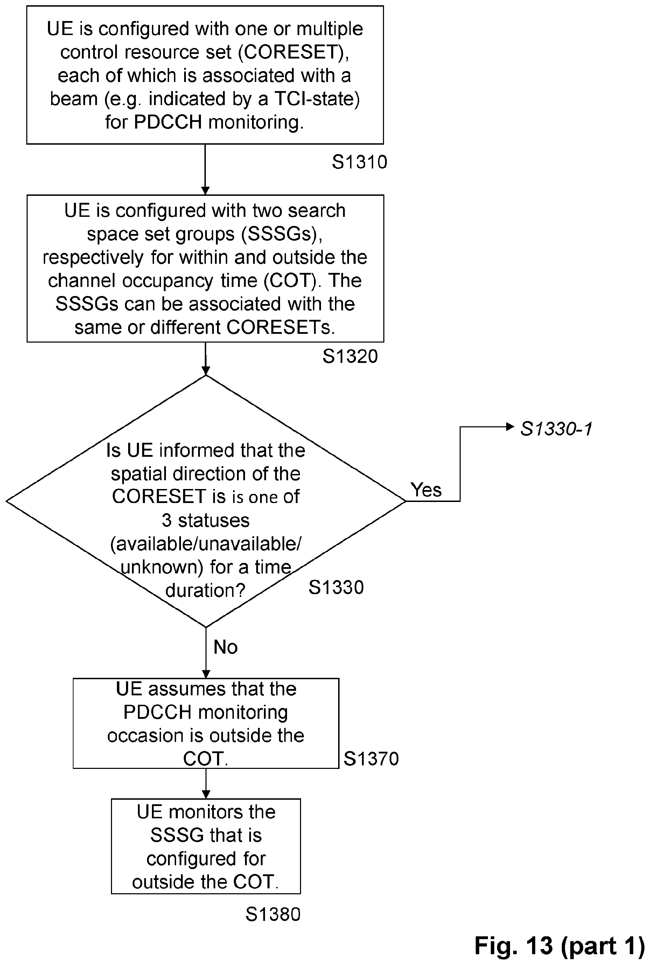

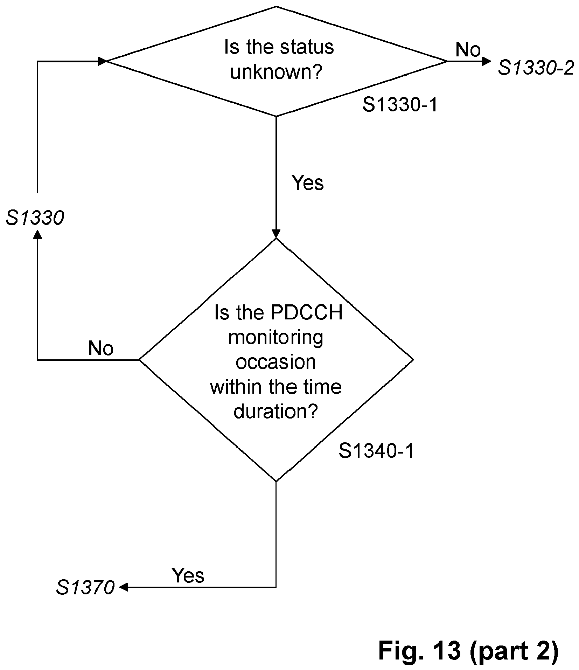

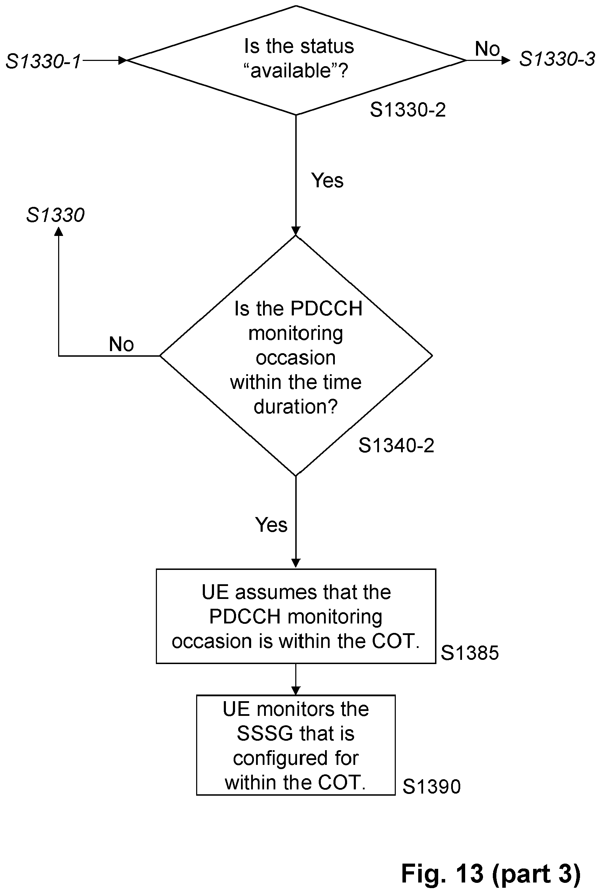

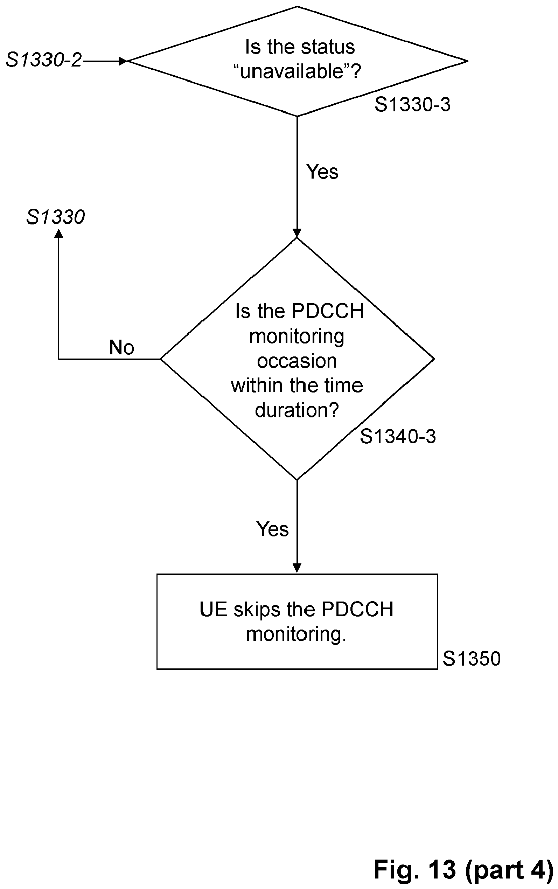

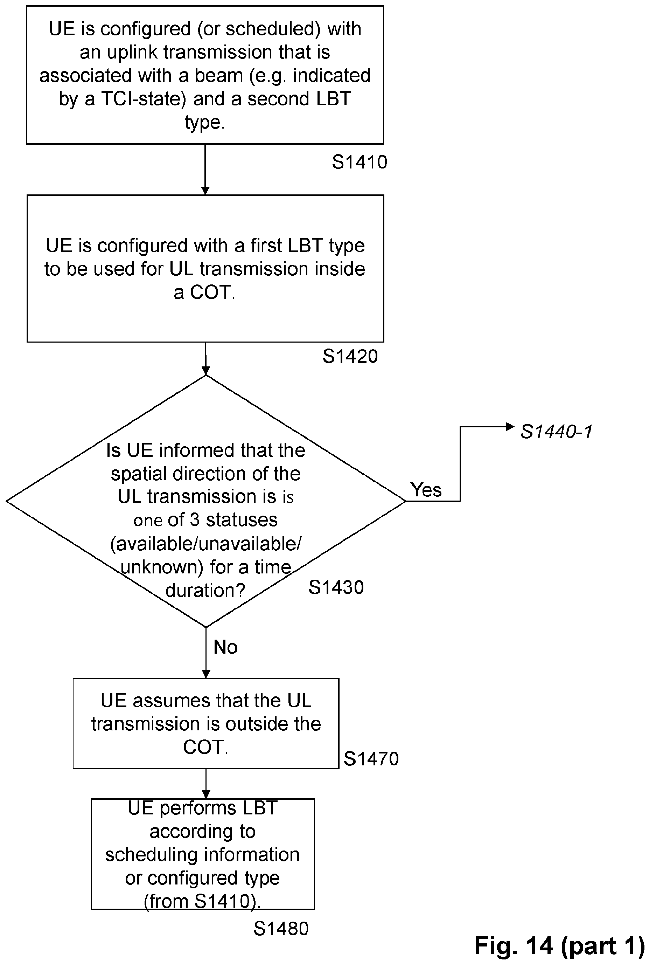

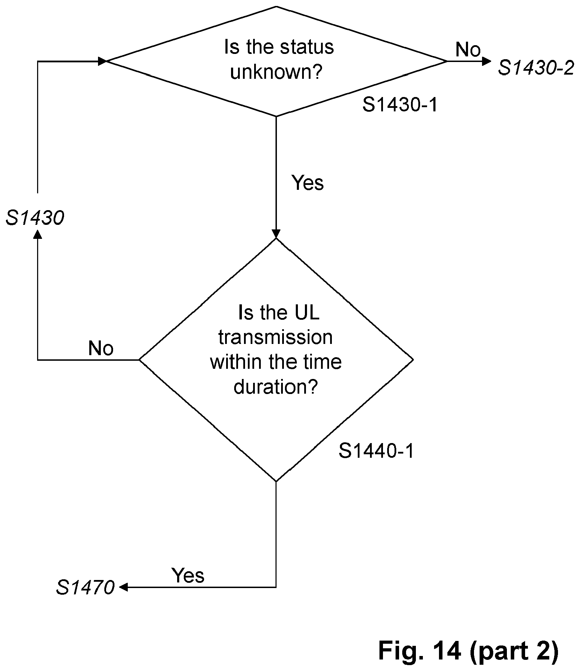

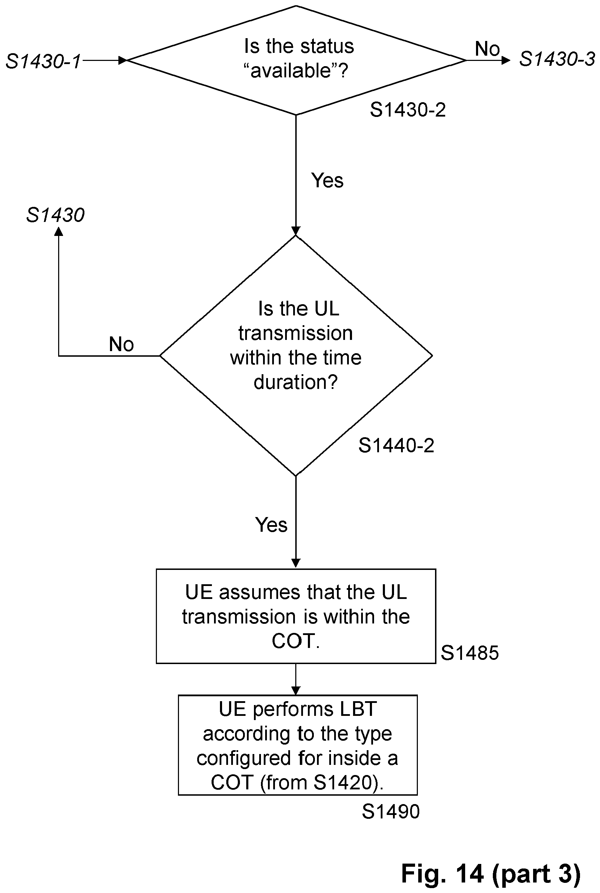

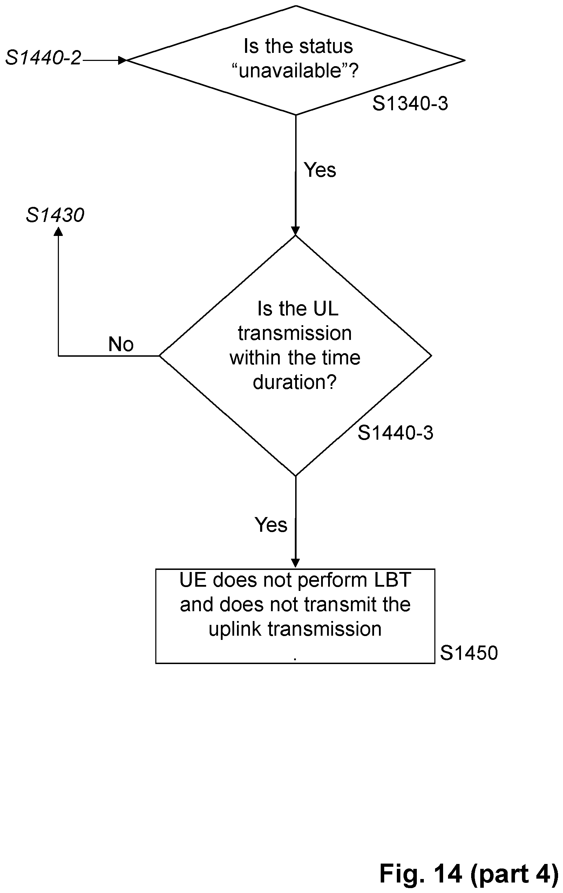

The UE behavior for the above-described three cases of availability statuses, unavailable, available, and unknown, is illustrated in **Fig.** 13 for PDCCH monitoring and in **Fig. 14** for UL transmission.

Step S1310 in Fig. 13 is similar to step S1110 and further includes the possibility of the UE being configured with multiple CORESETs, each of which is associated with a beam (e.g. by indication via respective TCI-states). In step S1320, the UE is configured with two search space set groups (SSSGs), respectively for within and outside the channel occupancy time (COT). Therein, it is noted that the SSSGs can be associated with the same or different CORESETs.

In step S1330, the UE determines whether it is informed that the spatial direction of the CORESET is one of 3 statuses (available/unavailable/ unknown) for a time interval. If the UE does not receive such information, it assumes in step S1370 that the PDCCH monitoring occasion is outside the COT, and monitors S1380 the SSSG configured for outside the COT. If the UE is informed that the availability status is unknown (step S1330-1) (e.g. if the base station has not sensed the direction associated with the CORESET beam), checks in step S1340-1 whether the monitoring occasion is within the time interval. If not, the process returns to step S1330, and if yes, the UE also proceeds with steps S1370 and S1380, like in the case of not being informed on the availability status. Also for positive determinations of the statuses "available" (in step S1330-2) and "unavailable" (in step S1330-3), it is tested whether the PDCCH monitoring occasion is within the time interval (steps 1340-2 and S1340-3). If not, the process in both cases returns to step S1330. If yes, in the case of the status "available", the UE assumes that the PDCCH monitoring occasion is within the COT (step S1385), and, correspondingly, monitors the SSSG that is configured for within the COT. In the case of the status unavailable, the UE skips monitoring (step S1350 corresponding to step S1150).

Regarding the UL scenario shown in Fig. 14, step S1410 in Fig. 14 is similar to step S1210. The LBT type of step S1410 is a second LBT type for outside the COT. In step S1420, the UE is configured with a first LBT type for inside the COT. In step S1430, the UE checks whether it is informed of an availability status of a spatial direction for the UL transmission. If not, it assumes that the UL transmission is outside the COT (step S1470) and performs LBT according to the second LBT type. S1430-1-3 and S1440-1-3 are similar to the corresponding steps S1330-1-3 and S1340-1-3 for the PDCCH monitoring shown in Fig. 13. If the status is "available" and the UL transmission is scheduled within the time interval, the UE assumes that the UL transmission is within the COT (step S1485) and performs LBT according to the "first" LBT type configured for inside the COT (step S1490).

On the other hand, if the status is "unavailable" and the UL transmission is scheduled or configured within the time interval, the UE does not perform LBT and does not transmit the UL transmission (step S1450 corresponding to step S1250).

It should be noted that the present disclosure is not limited to the order of conditionals shown in Figures 13 and 14, which is chosen for illustration purposes. For instance, the order of steps S1330-2 and S1330-3 (and correspondingly, S1440-2 and S1440-3) is interchangeable, or the status may be determined by evaluating a flag or bit field without performing subsequent conditional queries for each of the three statuses.

The present disclosure refers to a "first" beam of a CORESET or UL transmission as being "covered" by a "second" beam, which is a direction or directional /angular range or geometric sector. Practically, the second beam can be considered to "cover" the first beam if the two beam ranges are identical in range and direction, overlapping, or if the first beam is a subrange of the second beam (e.g. a narrow beam from Fig. 7 as a subrange of the wide bam shown in Fig. 6). The UE can determine that the first beam is covered by the second beam if an identifier of the first beam is equal to an identifier of the second beam or if there is a mapping (e.g. configured) between an identifier of the first beam with an identifier of the second beam.

In the following, examples are shown of how to define a direction that is understandable to the UE, e.g. how the UE is enabled to relate the "second" beam to the "first" beam.

As a first example, the second beam is represented by a transmission configuration indicator, TCI, state ID and the UE circuitry 880, in operation, determines that the first beam is covered by the second beam if a TCI state ID of the downlink control channel or a TCI state ID of the uplink transmission is the same as the TCI state ID representing the second beam.

Accordingly, the direction is represented by a TCI state. If the TCI state ID of a CORESET or UL transmission is the same as the direction representation, which is also a TCI state ID, the CORESET or, respectively, UL transmission is covered.

The indication of covering beams by TCI states provides a simple solution without need to introduce additional parameters.

However, if the CORESET or UL transmission has a different TCI state than that of the indicated direction, it may be difficult to judge whether or not the CORESET or UL transmission is covered by the direction. Moreover, since the TCI state ID is included in the UE-specific configuration, different UEs may generally understand the TCI state differently even if the TCI state ID is the same. Therefore, when the covering of beams is indicated by the TCI state, the gNB may be required to allocate the same TCI state IDs to the same beams for different UEs, to facilitate indication via group-common DCI such as DCI 2_0.

As a second example, a direction is represented by a SSB beam index, and a UE-specific mapping between SSB indices and downlink and uplink beams is used.

For instance, the UE transceiver 870, in operation, receives a mapping configuration indicating a mapping of each of a plurality of SSB beam indices to one or more first beams including said firs beam. The mapping configuration is specific to the terminal apparatus. Here, each of the plurality of "second beams" is respectively represented by a SSB beam index.

The DCI indicates the availability status of the second beam for an SSB beam index representing the second beam out of the plurality of SSB beam indexes. The UE circuitry 880, in operation, determines that the first beam is covered by the second beam if the mapping configuration indicates a mapping of the first beam to the SSB beam index representing the second beam.

For example, the base station circuitry 830 configures the mapping and the BS transceiver 820 transmits the mapping to the UE by UE-specific RRC signaling.

For example, the following UE-specific table may be configured by UE-specific RRC signaling:

**Table 3**

| SSB index | UE-specific DL/UL beams |
|-----------|-------------------------|
| SSB #0 | TCI-state ID = 0,1,2.<br>SRS-ResourceSetId = 0,1.<br>PUCCH-SpatialRelationInfo-Id = 0,1. |
| SSB #1 | TCI-state ID = 3,4,5,6.<br>SRS-ResourceSetId = 2,3,4.<br>PUCCH-SpatialRelationInfo-Id = 2,3. |
| SSB #2 | TCI-state ID = 7,8.<br>SRS-ResourceSetId = 5,6.<br>PUCCH-SpatialRelationInfo-Id = 4,5. |
| ... | ... |

As can be seen from Table 3, as an indication of the first beam, a combination of TCI state ID, SRS (Sounding Reference Signal) Resource Set ID, and PUCCH Spatial Relation Info ID is provided. However, the present disclosure is not limited thereto. In embodiments where a mapping table between first beams and SSB beams as second beams is used, the first beam is indicated by an identification of a the UE's serving beam including an UL beam, a downlink beam of a pair of an UL and a DL beam, which may be represented by one or more of the parameters shown in Table 3 or by different parameters configured in a UE-specific configuration.

It is noted that in Table 3 pluralities of TCI State IDs, SRS Resource Set ID, and PUCCH Spatial Relation Info ID are mapped to respective single SSB beam index. This is in line with the possibility that a plurality of "narrow" first beams as shown in Fig. 7 is covered by a singe "wide" second beam as shown in Fig. 6.

Directional availability (of the "second beam") is indicated per SSB beam. Based on the mapping table, the UE is enabled to determine whether the UE's serving (UL and/or DL) beam is covered by the indicated direction indicated in the DCI.

Accordingly, the indication in the DCI is based on SSB beams, which are commonly understood by all UEs. This facilitates group-common indication using a DCI such as DCI format 2_0 or an enhanced format based on DCI 2_0.

Moreover, with the mapping table, there is no ambiguity when determining whether a certain UL transmission or CORESET is covered by the indication. Moreover, flexibility is facilitated since it is possible to update the table via RRC signaling in a semi-static manner, with the price of some signaling overhead for the configuration of the mapping table.

In the following, several signaling examples and details are provided for indicating the directional availability (of the second beam) and the associated time or time interval for which the directional availability is indicated in the DCI (e.g. based on DCI 2_0).

In some embodiments, the DCI comprises a first field indicating the availability status for each of a plurality of second beams including said second beam.

For instance, it may be assumed that all directions or second beams have the same associated time for which availability is indicated. Such signaling is applicable for SDM (spatial domain multiplexed) transmission of available directions / second beams within one channel occupancy or COT. All second beams or directions share a common time duration as determined in DCI format 2_0, for instance by a CO (channel occupancy) duration field, or if a CO duration field is not provided, by a number of slots for which there SFI field provides slot formats (e.g. by a mapping for the slot format combination provided by *slotFormats* to a corresponding SFI-index field value in DCI format 2_0 provided by *slotFormatCombinationId,* for details see 3GPP TS38.213, version V17.0.0 chapter 11.1.1 incorporated herein by reference).

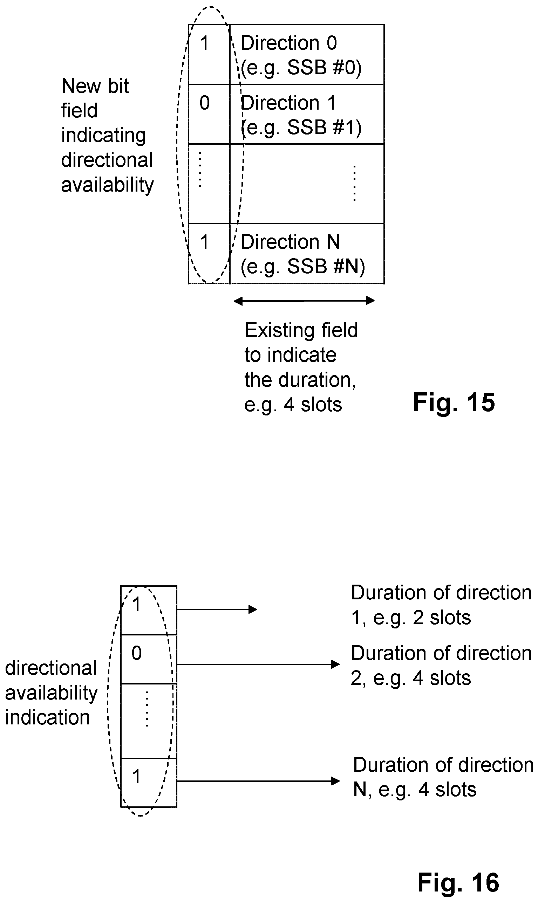

For instance, a bit field is provided in the DCI where a respective bit indicates the availability for each direction (e.g. represented by SSB beam indices), as shown in **Fig. 15.** It is noted that with one respective bit for each direction, it is possible to indicate two availability states (or availability statuses). However, the indication of second beams by SSB beam indexes is exemplary, all examples of indicating the availability in this disclosure can also be applied to directions being represented by TCI states as described above.

Depending on whether three states (available, unavailable, and unknown) are indicated, the following variations of the first field are possible.

As a first variation, two states are indicated, where one bit value (e.g. 1) indicates "available", and the other bit value (e.g. 0) indicates "unavailable".

For instance, if the directions or "second" beams are represented by SSB beam indices, the new bit field has a length equal to the number of all SSBs (or SSB beams) in a cell, e.g. $N_{SSB}^{QCL}$ or a number of "1"s in the field "*ssb-PositionsInBurst*" in SIB1 (system information block 1) (see 3GPP TS38.213, version V17.0.0, chapter 4.1 incorporated herein by reference). However, since there is no possibility to signal the availability status "unknown", the gNB is required to sense all directions to determine whether they are available or unavailable to signal the availability statuses accordingly.

In a second variation, one bit value (e.g."1") indicates "available", and the other bit value (e.g. "0") indicates "unknown". Therein, the length of the bit field can be the same as in the above first variant. Using an indication of the status "unknown" (e.g. by "0") takes away the need for the gNB to sense those directions or "second" beams that it does not intend to use.

As a third variation, one bit value (e.g. "1") indicates "unknown", and the other bit value indicates "unavailable". The length of the bitmap can be the same as in the preceding two variants. With this variation, it is not possible to explicitly indicate the status "available". However, the UE may assume that the direction on which the DCI comprising the bitmap indicating the availability statuses is received is available even if it is indicated as unknown.

As a fourth variant two bitmaps are provided. A first bitmap indicates whether a direction has been sensed or not. E.g. "1" indicates that the direction or "second beam" has been sensed, and "0" indicates that the direction has not been sensed and the availability status is thus "unknown". The second bitmap indicates for each sensed direction whether it is available or not.

The length of the first bitmap is the same as the lengths of the bit maps in the above-described three variants. The second bitmap may have the same length as the first bitmap as a fixed length (the bits for directions that have not been sensed can then be ignored by the UE), or a variable length equal to the number of sensed directions (e.g. the number of "1"s in the first bitmap).

As described above, a bitmap is introduced as a new field to indicate the availability status for the plurality of second beams, e.g. in DCI format 2_0. However, the present disclosure is not limited thereto. Instead, the UE circuitry 880 may assume that an available direction of channel occupancy is the same as a TCI state of a CORESET that configures the resources carrying the DCI that indicates the time interval for which the direction is available or a SSB beam index that is mapped to the TCI state (which is a different CORESET than the CORESET for the control channel to be received in the downlink scenario of the present disclosure). Such a determination of an available direction may be used if the direction is represented by a TCI state, as described above as well as if the direction is represented by a SSB beam. In the latter case, the UE may assume that the available direction is represented by a SSB beam index that is mapped to the TCI state of the CORESET for the DCI indicating the time interval. In these where no bit field is introduced for the indicating the availability status per direction, the indication of the availability status is implicit in the DCI that indicates the time interval.

In the description above, the length of the bitmap is assumed exemplarily equal to the number of all SSBs (or SSB beams) in a cell. However, the present disclosure is not limited thereto. In some scenario, the bitmap can have reduced length as long as there is no confusion about which bit represents which beam or direction. For example, a list of SSB indexes can be also indicated together with the bitmap.

As described so far, the DCI including the first field is applicable to SDM (spatial domain multiplexed or space division multiplexed) transmission of available directions within one channel occupancy.

However, in embodiments where a first field indicating the availability status, the DCI may comprise a second field (which may be called "directional duration") indicating, for each of the plurality of second beams, a duration of the time interval for which the availability status is indicated by the first field.

An example is shown in **Fig. 16,** where the availability field (the above-mentioned "first field" indicates that directions (e.g. SSB beams) 1 and N are available, but direction 2 is unavailable. Here, the directional duration field (or "second field") indicates the duration of the availability in units of slots (2 slots, 4 slots, ..., 4 slots). However, it is noted that the unit of "symbol" can be used instead of slots to indicate the directional duration as a further example.

It is further noted that the number of elements in the directional duration (the number of directions / "second beams" for which the duration is indicate) may be equal to the number of all directions (corresponding e.g. to the plurality of second beams) or, as another example, to the number of available directions indicated as available by the first field. In this case, for unavailable and/or unknown directions, the availability status is assumed to remain unknown or unavailable for the whole duration of the COT.

In the above example, all available directions (second beams) are assumed to be available starting from the beginning of the channel occupancy or COT (e.g. the time instance where the DCI indicating the directional availability is received). Accordingly, for different directions, availability starts from the same symbol, but may end at different symbols. Like the first field, the second field is applicable for SDM of available directions.

However, in some embodiments, the second field may indicate, in addition to the duration, a starting time of the time interval for each of the plurality of second beams or for each second beam determined to be available e.g. indicated "available" by the second field. With this indication, the second field may be called "directional time allocation". It is sufficient that the second field is provided for each of the plurality of directions indicated as "available" in the first field.

Such an indication of directional time allocation may provide for flexible time indication for each available direction.

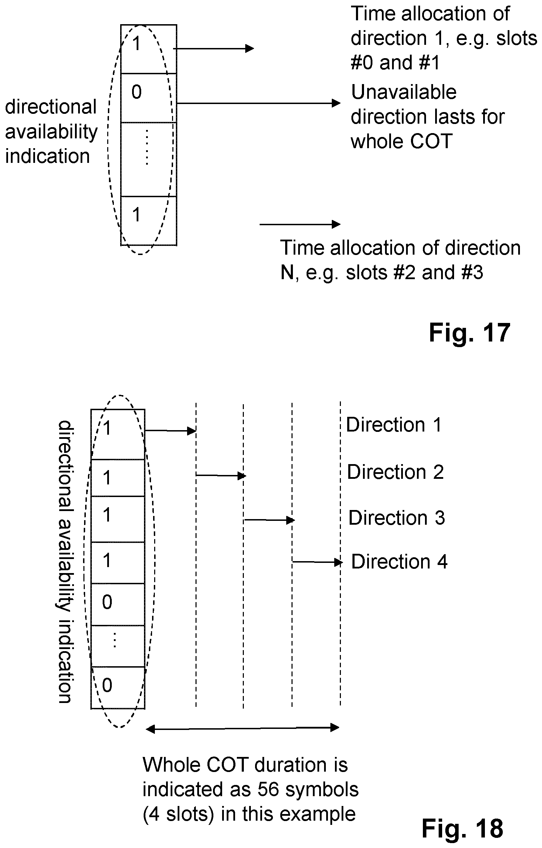

An example is shown in **Fig. 17.** For example, the CO duration field, as in DCI 2_0, indicates 56 symbols (corresponding to 4 slots). In the example shown, like in Fig. 16, the directional availability field (the first field) indicates that directions 1 and N are available out of all directions. A possible indication of the directional time allocation is
( starting symbol=#0, length=28symbols;
starting symbol=#27, length=28symbols; )
with each row mapped to one available direction in the same order in the availability indication.

With the directional time allocation, availability on different directions can start from and end at different symbols. The directional time allocation is applicable for TDM (time domain multiplexed or time division multiplexed) or hybrid (TDM + SDM) transmission/multiplexing of available directions.

The above described directional time allocation can be used for time division multiplexed (TDMed) transmission. As an alternative, and with a reduced signaling overhead, a one bit indication (a "fourth field", which may be called TDM indication bit) may be provided to indicate whether the available directions (e.g. the beams indicated as being available by the first field) are time division multiplexed (transmitted in a TDM manner).

If the TDM indication bit indicates "true", the gNodeB should make sure that the sum of indicated durations for all available directions is not larger than the whole COT.

Returning to the example shown in Fig. 17, the CO duration indication field from DCI 2_0 indicates 56 symbols (4 slots). The directional availability field (first field) indicates that directions 1 and N are available. The directional duration indicates (length = 28 symbols ; length = 28 symbols), with each element mapped to one available direction according to the order lower to higher (direction or beam) index. In this example, to indicate the time allocation illustrated in Fig. 17, the TDM bit indicates "true".

With the TDM indication bit, in combination with the directional duration field indicating the duration (without indicating the starting symbol), it is possible to apply TDM where transmission/reception is performed sequentially on available directions with different durations of available time intervals.

As an alternative or additional type of TDM indication, a 2 bit indication (or an indication of more bits) may be used to indicate different patterns of TDM transmission. For instance, the DCI includes a fourth field indicating a time division multiplexing pattern out of a plurality of time division multiplexing patterns known to the terminal apparatus according to which the second beams indicated as being available by the first field are time division multiplexed.

TDM pattern may indicate indicates how a COT is time distributed among the directional. sectors. A TDM pattern may for instance define the beam sweeping cycle of TDM multiplexing (e.g. the available duration for each available direction is the sweeping cycle divided by the number of directions) and the distribution of the COT or a plurality of slots among the directions

(e.g. whether they share the COT or a plurality of UL, DL , and/or flexible slots from an SFI indication equally).

An example of 2-bit codepoint of TDM indication may be as follows:
"00": TDM is not used

"01", "10", "11": TDM transmission of available directions according to index order, as shown in **Figures 18 - 20.**

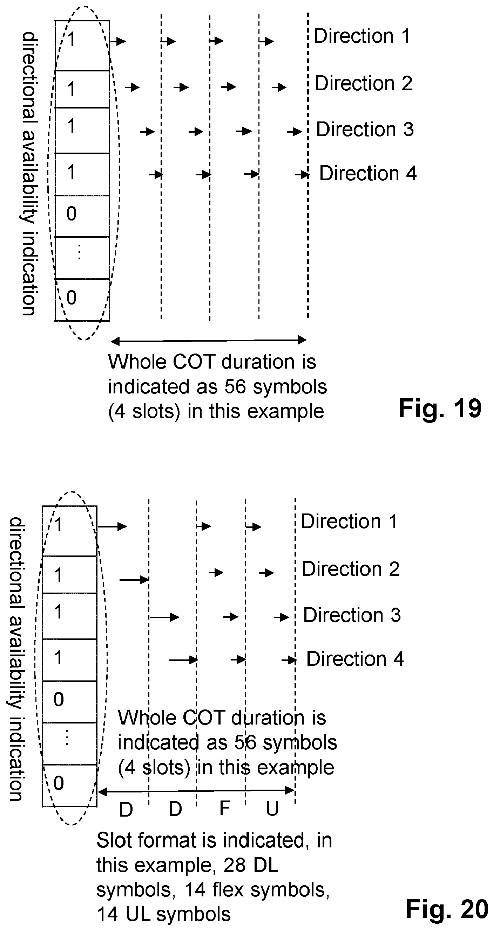

For instance, "01" may indicate that available directions share the whole COT equally, with the COT as one sweeping cycle, as shown in Fig. 18. "10" may indicate that the available directions share a slot equally, with one sweeping cycle completed in one slot, as shown in Fig. 19. Further, "11" may indicate that available directions share the DL/UL/Flexible slot format equally, with one sweeping cycle completed in adjacent symbols of UL or DL direction, as shown in Fig.20.

It is noted that if equal sharing would result in fractional symbols, then one direction (e.g. with a highest index) may be allocated a smaller number of symbols than the other directions.

In some embodiments, the DCI includes, for each of the plurality of second beams or each second beam indicated as being available, a slot format indication, SFI, indicating, for each symbol within the slot, the availability status of the second beam. Rather than being applied to the whole cell, the SFI is applied per available direction.

For instance, if the SFI indicates a DL symbol for a direction, the UE assumes (e.g. the UE circuitry determines) that the symbol is available on the DL over this direction or beam. If the SFI indicates an UL symbol for a direction, the UE assumes that the symbol is available on the UL over this direction or beam.

Further, if the SFI indicates a flexible symbol for a direction, the UE assumes that the symbol is not allocated to the direction. Therefore, the UE can skip configured PDCCH monitoring or configured UL transmission covered by the direction in the symbol indicated as flexible. However, if dynamic scheduling (i.e. using scheduling DCI) indicates the flexible symbols as part of PDSCH or PUSCH, UE should perform reception of PDSCH or transmission of PUSCH on the flexible symbols according to the scheduling DCI. This provides more flexibility to repurpose of the usage of flexible symbols.

Moreover, the UE can skip configured PDCCH monitoring if the SFI indicates UL for the symbol where the PDCCH is configured, or skip UL transmission if DL is indicated by SFI for the time resource where the UL transmission is configured.

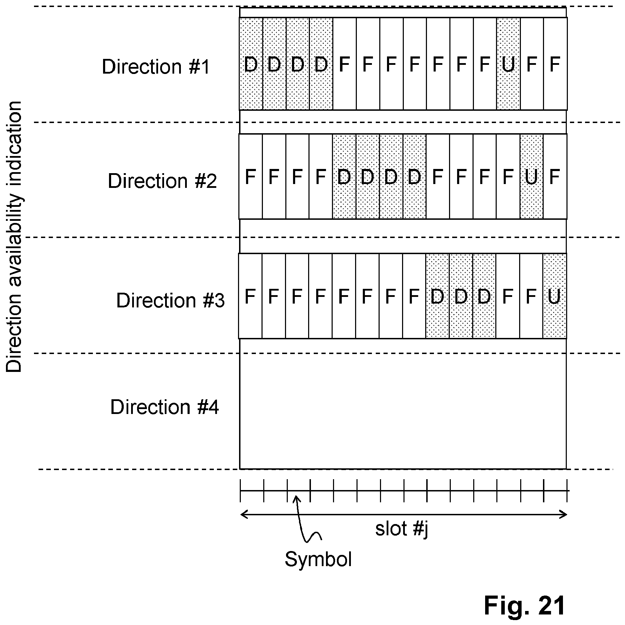

An example is shown in Fig. 21, where TDM transmission over three available directions is realized.

It is noted that SDM (space division multiplex) or hybrid transmission is also possible. However, the gNB may aim to avoid creating conflicts between UL and DL over the same symbol (although at different spatial directions), to avoid interference.

The use of the legacy slot format indication on a per direction or per beam basis is applicable to both SDM and TDM of available directions.

It is further noted that slot format indication fields indicating an availability status may be transmitted, for the plurality of directions, in a single DCI or in respectively different DCIs.

In some embodiments, it has been described that a Search Space Set Group is configured and switched per direction independently. However, SSSG switching indication may as well be used to indicate whether a direction (or second beam) is available for a UE or not. For instance, the UE transceiver, in operation, receives a switching indication indicating the UE to switch from a current SSSG to a new SSSG. The UE circuitry assumes then or determines that the spatial direction or second beam associated with the new SSSG becomes available for the UE (to receive /monitor PDCCH or to perform UL transmission).

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

The present disclosure may be applied to any of a licensed band and an unlicensed band.

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

The present disclosure can be realized by software, hardware, or software in cooperation with hardware. Each functional block used in the description of each embodiment described above can be partly or entirely realized by an LSI (large scale integration) such as an integrated circuit (IC), and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Summarizing, according to a first aspect, provided is a terminal apparatus comprising a transceiver which, in operation, receives configuration or scheduling information indicating a time resource on a frequency spectrum applicable to listen-before-talk, LBT, operation for monitoring a downlink control channel or for performing an uplink transmission, and indicating an association of the time resource with a first beam, and receives downlink control information, DCI,

indicating an availability status of a second beam out of a plurality of second beams in a time interval on the frequency spectrum, wherein the first beam is at least partially covered by said second beam, and circuitry which, in operation, determines, based on the DCI, the availability status of the second beam in the time resource and whether the time resource lies within the time interval, and determines whether or not to monitor the downlink control channel or perform the uplink transmission in the time resource in accordance with the availability status of the second beam and the result of determining whether the time resource lies within the time interval.

According to a second aspect provided in addition to the first aspect, if the circuitry determines that the second beam is unavailable within the time interval and that the time resource lies within the time interval, the circuitry, in operation, skips monitoring the downlink control channel or performing the uplink transmission in the time resource.

According to a third aspect provided in addition to the first or second aspect, wherein the transceiver, in operation, receives a configuration of a first search space set group for monitoring the downlink control channel within a channel occupancy time, COT, of a base station serving the terminal apparatus or a first LBT type for performing the uplink transmission within the COT and of a second search space set group for monitoring the downlink control channel or a second LBT type for performing the uplink transmission outside the COT, and if the circuitry determines that the second beam is available within the time interval and that the time resource lies within the time interval, the circuitry, in operation, controls the transceiver to monitor the downlink control channel in the first search space set group in the time resource or to perform LBT for the uplink transmission according to the first LBT type in the time resource.

According to a fourth aspect provided in addition to the third aspect, if the circuitry determines that the availability status of the second beam is unknown within the time interval, the circuitry, in operation, controls the transceiver to monitor the downlink control channel in the second search space set group or to perform LBT for the uplink transmission according to the second LBT type.

According to a fifth aspect provided in addition to any of the first to fourth aspects, the second beam is represented by a transmission configuration indicator, TCI, state ID and the circuitry, in operation, determines that the first beam is covered by the second beam if a TCI state ID of the downlink control channel or a TCI state ID of the uplink transmission is the same as the TCI state ID representing the second beam.

According to a sixth aspect provided in addition to any of the first to fourth aspects, the transceiver, in operation, receives a mapping configuration indicating a mapping of each of a plurality of synchronization signal block, SSB, beam indexes to one or more first beams including said first beam, wherein the mapping configuration is specific to the terminal apparatus and each of the plurality of second beams is respectively represented by a SSB beam index, the DCI indicates the availability status for an SSB beam index out of the plurality of SSB beam indexes representing said second beam, and the circuitry, in operation, determines that the first beam is covered by the second beam if the mapping configuration indicates a mapping of said first beam to the SSB beam index representing said second beam.

According to a seventh aspect provided in addition to any of the first to sixth aspects, the DCI comprises a first field indicating the availability status for each of a plurality of second beams including said second beam.

According to an eighth aspect provided in addition to the seventh aspect, the DCI comprises a second field indicating a duration of the time interval for each second beam indicated as being available by the first field, out of the plurality of second beams.

According to a ninth aspect provided in addition to the eighth aspect, the second field indicates the duration and a starting time of the time interval for each second beam indicated as being available by the first field, out of the plurality of second beams.

According to a tenth aspect provided in addition to the eighth aspect, the DCI includes a third field indicating whether the second beams indicated as being available by the first field are time division multiplexed, the third field having a length of one bit.

According to an eleventh aspect provided in addition to the seventh aspect, wherein the DCI includes a fourth field indicating a time division multiplexing pattern out of a plurality of time division multiplexing patterns known to the terminal apparatus according to which the second beams indicated as being available by the first field are time division multiplexed.

According to a twelfth aspect provided in addition to the seventh aspect, the DCI includes, for each second beam indicated as being available by the first field out of the plurality of second beams, a slot format indication, SFI, indicating, for each symbol within the slot, the availability status of the second beam.

According to a thirteenth aspect, provided is a base station comprising a transceiver, which, in operation, transmits configuration or scheduling information indicating a time resource on a frequency spectrum applicable to listen-before-talk, LBT, operation for monitoring a downlink control channel or for performing an uplink transmission, and indicating an association of the time resource with a first beam; and circuitry which, in operation, determines, via listen-before-talk, LBT, operation, an availability status of a second beam out of a plurality of second beams in a time interval including the time resource on the frequency spectrum, wherein the first beam is at least partially covered by said second beam, wherein the transceiver, in operation, transmits downlink control information, DCI, indicating the availability status of the second beam in the time interval on the frequency spectrum, and the circuitry, in operation, controls the transceiver to perform transmission of the downlink control channel or reception of the uplink transmission in accordance with the availability status of the second beam in the time interval on the frequency spectrum.

According to a fourteenth aspect, provided is communication method to be performed by a terminal apparatus, comprising receiving configuration or scheduling information indicating a time resource on a frequency spectrum applicable to listen-before-talk, LBT, operation for monitoring a downlink control channel or for performing an uplink transmission, and indicating an association of the time resource with a first beam, receiving downlink control information, DCI, indicating an availability status of a second beam out of a plurality of second beams in a time interval on the frequency spectrum, wherein the first beam is at least partially covered by said second beam, determining, based on the DCI, the availability status of the second beam in the time resource and whether the time resource lies within the time interval, and determining, whether or not to monitor the downlink control channel or perform the uplink transmission in the time resource in accordance with the availability status of the second beam and the result of determining whether the time resource lies within the time interval.

According to a fifteenth aspect, provided is a communication method to be performed by a base station, comprising transmitting configuration or scheduling information indicating a time resource on a frequency spectrum applicable to listen-before-talk, LBT, operation for monitoring a downlink control channel or for performing an uplink transmission, and indicating an association of the time resource with a first beam, determining, via listen-before-talk, LBT, operation, an availability status of a second beam out of a plurality of second beams in a time interval including the time resource on the frequency spectrum, wherein the first beam is at least partially covered by said second beam, transmitting downlink control information, DCI, indicating the availability status of the second beam in the time interval on the frequency spectrum, and controlling transmission of the downlink control channel or reception of the uplink transmission in accordance with the availability status of the second beam in the time interval on the frequency spectrum.

It is noted that the second to twelfth aspects are correspondingly applicable to the base station of the thirteenth embodiment. Moreover, the steps performed by the circuitry in operation, the steps performed by the transceiver in operation, as, well as the steps performed by the interface in operation referred to in the above terminal apparatus and base station aspects correspond to aspects of respective methods.

Further provided is an integrated circuit for a communication apparatus such as a terminal apparatus or base station, which controls the communication apparatus to perform all steps of the above mentioned method aspects.

According to a sixteenth aspect, provided is an integrated circuit which, in operation, controls a process of a terminal apparatus, the process comprising receiving configuration or scheduling information indicating a time resource on a frequency spectrum applicable to listen-before-talk, LBT, operation for monitoring a downlink control channel or for performing an uplink transmission, and indicating an association of the time resource with a first beam, receiving downlink control information, DCI, indicating an availability status of a second beam out of a plurality of second beams in a time interval on the frequency spectrum, wherein the first beam is at least partially covered by said second beam, determining, based on the DCI, the availability status of the second beam in the time resource and whether the time resource lies within the time interval, and determining, whether or not to monitor the downlink control channel or perform the uplink transmission in the time resource in accordance with the availability status of the second beam and the result of determining whether the time resource lies within the time interval.

According to a seventeenth aspect, provided is an integrated circuit which, in operation, controls a process of a terminal apparatus, the process comprising transmitting configuration or scheduling information indicating a time resource on a frequency spectrum applicable to listen-before-talk, LBT, operation for monitoring a downlink control channel or for performing an uplink transmission, and indicating an association of the time resource with a first beam, determining, via listen-before-talk, LBT, operation, an availability status of a second beam out of a plurality of second beams in a time interval including the time resource on the frequency spectrum, wherein the first beam is at least partially covered by said second beam, transmitting downlink control information, DCI, indicating the availability status of the second beam in the time interval on the frequency spectrum, and controlling transmission of the downlink control channel or reception of the uplink transmission in accordance with the availability status of the second beam in the time interval on the frequency spectrum.

In addition, a non-transitory medium is provided storing program instructions which, when executed on a processing circuitry such as a general purpose processor, cause the processing circuitry to perform all steps of the above mentioned method embodiments.

In summary, techniques disclosed herein feature are a terminal apparatus, a base station, and methods for a terminal apparatus and a base station. The terminal apparatus comprises a transceiver, which, in operation, receives configuration or scheduling information indicating a time resource on a frequency spectrum applicable to listen-before-talk for monitoring a downlink control channel or for performing an uplink transmission, and indicating an association of the time resource with a first beam, and receives downlink control information, DCI, indicating an availability status of a second beam out of plural second beams in a time interval on the frequency spectrum, wherein the first beam is at least partially covered by said second beam, and circuitry which, in operation, determines, based on the DCI, the availability status and whether the time resource lies within the time interval, and determines whether to monitor the downlink control channel or perform the uplink transmission in accordance with the determination.

**Claims**

1. A terminal apparatus comprising:

   a transceiver which, in operation, receives configuration or scheduling information indicating a time resource on a frequency spectrum applicable to listen-before-talk, LBT, operation for monitoring a downlink control channel or for performing an uplink transmission, and indicating an association of the time resource with a first beam, and receives downlink control information, DCI, indicating an availability status of a second beam out of a plurality of second beams in a time interval on the frequency spectrum, wherein the first beam is at least partially covered by said second beam; and
   circuitry which, in operation, determines, based on the DCI, the availability status of the second beam in the time resource and whether the time resource lies within the time interval, and determines whether or not to monitor the downlink control channel or perform the uplink transmission in the time resource in accordance with the availability status of the second beam and the result of determining whether the time resource lies within the time interval.

2. The terminal apparatus according to claim 1, wherein, if the circuitry determines that the second beam is unavailable within the time interval and that the time resource lies within the time interval, the circuitry, in operation, skips monitoring the downlink control channel or performing the uplink transmission in the time resource.

3. The terminal apparatus according to claim 1 or 2, wherein the transceiver, in operation, receives a configuration of a first search space set group for monitoring the downlink control channel within a channel occupancy time, COT, of a base station serving the terminal apparatus or a first LBT type for performing the uplink transmission within the COT and of a second search space set group for monitoring the downlink control channel or a second LBT type for performing the uplink transmission outside the COT, and
   if the circuitry determines that the second beam is available within the time interval and that the time resource lies within the time interval, the circuitry, in operation, controls the transceiver to monitor the downlink control channel in the first search space set group in the time resource or to perform LBT for the uplink transmission according to the first LBT type in the time resource.

4. The terminal apparatus according to claim 3, wherein, if the circuitry determines that the availability status of the second beam is unknown within the time interval, the circuitry, in operation, controls the transceiver to monitor the downlink control channel in the second search space set group or to perform LBT for the uplink transmission according to the second LBT type.

5. The terminal apparatus according to any of claims 1 to 4, wherein, the second beam is represented by a transmission configuration indicator, TCI, state ID and the circuitry, in operation, determines that the first beam is covered by the second beam if a TCI state ID of the downlink control channel or a TCI state ID of the uplink transmission is the same as the TCI state ID representing the second beam.

6. The terminal apparatus according to any of claims 1 to 4, wherein the transceiver, in operation, receives a mapping configuration indicating a mapping of each of a plurality of synchronization signal block, SSB, beam indexes to one or more first beams including said first beam, wherein the mapping configuration is specific to the terminal apparatus and each of the plurality of second beams is respectively represented by a SSB beam index,

   the DCI indicates the availability status for an SSB beam index out of the plurality of SSB beam indexes representing said second beam, and
   the circuitry, in operation, determines that the first beam is covered by the second beam if the mapping configuration indicates a mapping of said first beam to the SSB beam index representing said second beam.

7. The terminal apparatus according to any of claims 1 to 6, wherein the DCI comprises a first field indicating the availability status for each of a plurality of second beams including said second beam.

8. The terminal apparatus according to claim 7, wherein the DCI comprises a second field indicating a duration of the time interval for each second beam indicated as being available by the first field, out of the plurality of second beams.

9. The terminal apparatus according to claim 8, wherein the second field indicates the duration and a starting time of the time interval for each second beam indicated as being available by the first field, out of the plurality of second beams.

10. The terminal apparatus according to claim 8, wherein the DCI includes a third field indicating whether the second beams indicated as being available by the first field are time division multiplexed, the third field having a length of one bit.

11. The terminal apparatus according to claim 7, wherein the DCI includes a fourth field indicating a time division multiplexing pattern out of a plurality of time division multiplexing patterns known to the terminal apparatus according to which the second beams indicated as being available by the first field are time division multiplexed.

12. The terminal apparatus according to any of claims 7, wherein the DCI includes, for each second beam indicated as being available by the first field out of the plurality of second beams, a slot format indication, SFI, indicating, for each symbol within the slot, the availability status of the second beam.

13. A base station comprising:

a transceiver, which, in operation, transmits configuration or scheduling information indicating a time resource on a frequency spectrum applicable to listen-before-talk, LBT, operation for monitoring a downlink control channel or for performing an uplink transmission, and indicating an association of the time resource with a first beam; and circuitry which, in operation, determines, via listen-before-talk, LBT, operation, an availability status of a second beam out of a plurality of second beams in a time interval including the time resource on the frequency spectrum, wherein the first beam is at least partially covered by said second beam; wherein the transceiver, in operation, transmits downlink control information, DCI, indicating the availability status of the second beam in the time interval on the frequency spectrum, and the circuitry, in operation, controls the transceiver to perform transmission of the downlink control channel or reception of the uplink transmission in accordance with the availability status of the second beam in the time interval on the frequency spectrum.

14. A communication method to be performed by a terminal apparatus, comprising:

receiving configuration or scheduling information indicating a time resource on a frequency spectrum applicable to listen-before-talk, LBT, operation for monitoring a downlink control channel or for performing an uplink transmission, and indicating an association of the time resource with a first beam; receiving downlink control information, DCI, indicating an availability status of a second beam out of a plurality of second beams in a time interval on the frequency spectrum, wherein the first beam is at least partially covered by said second beam; determining, based on the DCI, the availability status of the second beam in the time resource and whether the time resource lies within the time interval; and determining, whether or not to monitor the downlink control channel or perform the uplink transmission in the time resource in accordance with the availability status of the second beam and the result of determining whether the time resource lies within the time interval.

15. A communication method to be performed by a base station, comprising:

transmitting configuration or scheduling information indicating a time resource on a frequency spectrum applicable to listen-before-talk, LBT, operation for monitoring a downlink control channel or for performing an uplink transmission, and indicating an association of the time resource with a first beam; determining, via listen-before-talk, LBT, operation, an availability status of a second beam out of a plurality of second beams in a time interval including the time resource on the frequency spectrum, wherein the first beam is at least partially covered by said second beam; transmitting downlink control information, DCI, indicating the availability status of the second beam in the time interval on the frequency spectrum; and controlling transmission of the downlink control channel or reception of the uplink transmission in accordance with the availability status of the second beam in the time interval on the frequency spectrum.

Fig. 1

Fig. 2

Fig. 3

Fig. 4

**Fig. 5**

**Fig. 6**

**Fig. 7**

Fig. 8

Fig. 9

# Base station           Terminal

```
┌─────────────────┐          ┌─────────────────┐
│    Transmit     │          │     Receive     │
│ configuration / │─────────▶│ configuration / │
│   scheduling    │          │   scheduling    │
└─────────────────┘          └─────────────────┘
       S1010                        S1020
         │                            │
         ▼                            │
┌─────────────────┐                   │
│    Determine    │                   │
│availability     │                   │
│  status         │                   │
│    (LBT)        │                   │
└─────────────────┘                   │
       S1025                          │
         │                            ▼
         ▼                   ┌─────────────────┐
┌─────────────────┐          │                 │
│                 │─────────▶│   Receive DCI   │
│  Transmit DCI   │          │                 │
│                 │          └─────────────────┘
└─────────────────┘                 S1040
       S1030                          │
         │                            ▼
         │                   ┌─────────────────┐
         │                   │    Determine    │
         │                   │availability     │
         │                   │  status         │
         │                   │    (DCI)        │
         │                   └─────────────────┘
         │                          S1045
         │                            │
         │                            ▼
         │                   ┌─────────────────┐
         │                   │ Determine (DCI): │
         │                   │ Time resource in │
         │                   │  time interval?  │
         │                   └─────────────────┘
         │                          S1050
         │                            │
         ▼                            ▼
┌─────────────────┐          ┌─────────────────┐
│  Control PDCCH  │          │Monitor for PDCCH│
│transmission / UL│◀────────▶│  / perform UL   │
│   reception     │          │  transmisison?  │
└─────────────────┘          └─────────────────┘
       S1055                        S1065
```

## Fig. 10

UE is configured with a control resource set (CORESET) that is associated with a beam (e.g. indicated by a TCI-state) for PDCCH monitoring

S1110

Is UE informed that the spatial direction of the CORESET is unavailable for a time duration?

S1130

No

Yes

Is the PDCCH monitoring occasions of the CORESET within the time duration?

S1140

No

Yes

UE skips the PDCCH monitoring

S1150

UE monitors (e.g. tries to receive and decode) the PDCCH

S1160

**Fig. 11**

UE is configured (or scheduled) with an uplink transmission that is associated with a beam (e.g. indicated by a TCI-state) and a LBT type

S1210

Is UE informed that the spatial direction of the uplink transmission is unavailable for a time duration? S1230

No

UE performs the LBT according to the configured (or scheduled) type

S1235

Yes

Is the uplink transmission within the time duration?

No

S1240

LBT passed?

S1245

Yes

No

Yes

UE does not transmit the uplink transmission

S1250

UE transmits the uplink transmission

S1260

**Fig. 12**

UE is configured with one or multiple control resource set (CORESET), each of which is associated with a beam (e.g. indicated by a TCI-state) for PDCCH monitoring.

S1310

UE is configured with two search space set groups (SSSGs), respectively for within and outside the channel occupancy time (COT). The SSSGs can be associated with the same or different CORESETs.

S1320

Is UE informed that the spatial direction of the CORESET is is one of 3 statuses (available/unavailable/unknown) for a time duration?

Yes → *S1330-1*

S1330

No

UE assumes that the PDCCH monitoring occasion is outside the COT.

S1370

UE monitors the SSSG that is configured for outside the COT.

S1380

**Fig. 13 (part 1)**

Fig. 13 (part 2)

Fig. 13 (part 3)

S1330-2 → **Is the status "unavailable"?** S1330-3

Yes ↓

S1330 ↑ No ← **Is the PDCCH monitoring occasion within the time duration?** S1340-3

Yes ↓

UE skips the PDCCH monitoring.  S1350

**Fig. 13 (part 4)**

UE is configured (or scheduled) with an uplink transmission that is associated with a beam (e.g. indicated by a TCI-state) and a second LBT type.

S1410

UE is configured with a first LBT type to be used for UL transmission inside a COT.

S1420

Is UE informed that the spatial direction of the UL transmission is is one of 3 statuses (available/unavailable/unknown) for a time duration?

S1430

Yes → *S1440-1*

No

UE assumes that the UL transmission is outside the COT.

S1470

UE performs LBT according to scheduling information or configured type (from S1410).

S1480

**Fig. 14 (part 1)**

Is the status
unknown?

No
*S1430-2*

S1430-1

Yes

*S1430*

Is the UL
transmission
within the time
duration?

No

S1440-1

*S1470*

Yes

**Fig. 14 (part 2)**

*S1430-1* → Is the status "available"? → **No** *S1430-3*

S1430-2

Yes

*S1430*

Is the UL transmission within the time duration?

**No**

S1440-2

Yes

UE assumes that the UL transmission is within the COT.

S1485

UE performs LBT according to the type configured for inside a COT (from S1420).

S1490

**Fig. 14 (part 3)**

*S1440-2* → Is the status "unavailable"?

S1340-3

Yes

*S1430*

No ← Is the UL transmission within the time duration?

S1440-3

Yes

UE does not perform LBT and does not transmit the uplink transmission

S1450

**Fig. 14 (part 4)**

New bit
field
indicating
directional
availability

| 1 | Direction 0 (e.g. SSB #0) |
| 0 | Direction 1 (e.g. SSB #1) |
| ⋮ | ⋮ |
| 1 | Direction N (e.g. SSB #N) |

←——————→

Existing field
to indicate
the duration,
e.g. 4 slots

**Fig. 15**

directional
availability
indication

| 1 | → Duration of direction 1, e.g. 2 slots |
| 0 | → Duration of direction 2, e.g. 4 slots |
| ⋮ | |
| 1 | → Duration of direction N, e.g. 4 slots |

**Fig. 16**

Time allocation of direction 1, e.g. slots #0 and #1

Unavailable direction lasts for whole COT

directional availability indication

Time allocation of direction N, e.g. slots #2 and #3

**Fig. 17**

directional availability indication

Direction 1

Direction 2

Direction 3

Direction 4

Whole COT duration is indicated as 56 symbols (4 slots) in this example

**Fig. 18**

directional availability indication

1 → → → → Direction 1
1 → → → → Direction 2
1 → → → → Direction 3
1 → → → → Direction 4
0
⋮
0

Whole COT duration is
indicated as 56 symbols
(4 slots) in this example

**Fig. 19**

directional availability indication

1 → → → Direction 1
1 → → → Direction 2
1 → → → Direction 3
1 → → → Direction 4
0
⋮
0

Whole COT duration is
indicated as 56 symbols
(4 slots) in this example

D  D  F  U

Slot format is indicated, in
this example, 28 DL
symbols, 14 flex symbols,
14 UL symbols

**Fig. 20**

Fig. 21

Europäisches
Patentamt

European
Patent Office

Office européen
des brevets

# EUROPEAN SEARCH REPORT

Application Number

EP 22 15 0597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/195334 A1 (ZHOU YAN [US] ET AL) 18 June 2020 (2020-06-18) * paragraph [0054] – paragraph [0079]; figures 5,6,10 * | 1-15 | INV. H04W72/12 H04W74/08 |
| X | WO 2021/206296 A1 (SAMSUNG ELECTRONICS CO LTD [KR]) 14 October 2021 (2021-10-14) * page 339 – page 380 * | 1-15 | |
| X | MODERATOR (LENOVO): "Feature lead summary#3 for [104-e-NR-52-71GHz-02] on PDCCH monitoring enhancements", 3GPP DRAFT; R1-2102242, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20210125 – 20210205 8 February 2021 (2021-02-08), XP051977804, Retrieved from the Internet: URL:https://ftp.3gpp.org/tsg_ran/WG1_RL1/T SGR1_104-e/Docs/R1-2102242.zip R1-2102242.docx [retrieved on 2021-02-08] * page 56 – page 58 * * Sections 2.4, 3.4; page 93 – page 94 * | 1-15 | TECHNICAL FIELDS SEARCHED (IPC) H04W H04B |

The present search report has been drawn up for all claims

| Place of search | Date of completion of the search | Examiner |
|---|---|---|
| The Hague | 7 June 2022 | Poort, Ingrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 0597

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2022

| Patent document cited in search report | | Publication date | Patent family member(s) | | Publication date |
|---|---|---|---|---|---|
| US 2020195334 | A1 | 18-06-2020 | AU | 2019399488 A1 | 10-06-2021 |
| | | | BR | 112021010846 A2 | 24-08-2021 |
| | | | CA | 3120247 A1 | 18-06-2020 |
| | | | CL | 2021001519 A1 | 03-12-2021 |
| | | | CN | 113170461 A | 23-07-2021 |
| | | | CO | 2021007560 A2 | 21-06-2021 |
| | | | EP | 3895487 A1 | 20-10-2021 |
| | | | JP | 2022511548 A | 31-01-2022 |
| | | | KR | 20210100616 A | 17-08-2021 |
| | | | SG | 11202107609P A | 30-08-2021 |
| | | | US | 2020195334 A1 | 18-06-2020 |
| | | | US | 2021399787 A1 | 23-12-2021 |
| | | | WO | 2020123046 A1 | 18-06-2020 |
| WO 2021206296 | A1 | 14-10-2021 | KR | 20210126289 A | 20-10-2021 |
| | | | WO | 2021206296 A1 | 14-10-2021 |

EPO FORM P0459

For more details about this annex : see Official Journal of the European Patent Office, No. 12/82

**REFERENCES CITED IN THE DESCRIPTION**

**Patent documents cited in the description**

- TR 38913